# EUROPEAN PATENT SPECIFICATION

(11) **EP 4 494 336 B1**
(45) Date of publication and mention of the grant of the patent: **30.09.2026**
(21) Application number: 23716961.0
(22) Date of filing: 17.03.2023
(51) Int. Cl.: H04L 67/51, H04W 4/50

(54) **ACR SELECTION AND COORDINATION**
ACR-AUSWAHL UND -KOORDINATION
SÉLECTION ET COORDINATION D'ACR

(30) Priority: 18.03.2022 US 202263321329 P
(43) Date of publication of application: 22.01.2025
(73) Proprietor: Interdigital Patent Holdings, Inc., Wilmington, DE 19809-3727 (US)
(72) Inventor: ROY, Michel, Quebec J5R 6C5 (CA); DI LALLO, Kevin, Laval, Quebec H7K 0B8 (CA); STARSINIC, Michael, Newtown, PA 18940 (US); WANG, Zhibi, Woodridge, IL 60517 (US); WANG, Chonggang, Princeton, NJ 08540 (US); ABBAS, Taimoor, Quebec J3E 3H2 (CA); GAZDA, Robert, Spring City, PA 19475 (US)
(74) Representative: AWA Sweden AB
(86) International application number: PCT/US2023/015580
(87) International publication number: WO 2023/177912

(56) References cited:
- "3rd Generation Partnership Project; Technical Specification Group Services and System Aspects; Study on Enhanced architecture for enabling Edge Applications; (Release 18)", no. V0.5.0, 1 March 2022 (2022-03-01), pages 1 - 73, XP052118752, Retrieved from the Internet <URL:https://ftp.3gpp.org/Specs/archive/23_series/23.700-98/23700-98-050.zip 23700-98-050_cb.docx> [retrieved on 20220301]
- "3 Generation Partnership Project; Technical Specification Group Services and System Aspects; Architecture for enabling Edge Applications; (Release 17)", no. V1.2.0, 7 December 2020 (2020-12-07), pages 1 - 131, XP051961778, Retrieved from the Internet <URL:https://ftp.3gpp.org/Specs/archive/23_series/23.558/23558-120.zip 23558-120_rm.doc> [retrieved on 20201207]

## Description

### CROSS REFERENCE TO RELATED APPLICATIONS

This application claims the benefit of U.S. Provisional Patent Application No. 63/321,329, filed March 18, 2022.

### BACKGROUND

Mobile communications using wireless communication continue to evolve. A fifth generation of mobile communication radio access technology (RAT) may be referred to as 5G new radio (NR). A previous (legacy) generation of mobile communication RAT may be, for example, fourth generation (4G) long term evolution (LTE). Document "3rd Generation Partnership Project; Technical Specification Group Services and System Aspects; Study on Enhanced architecture for enabling Edge Applications; (Release 18)", no. V0.5.0 1 March 2022 (2022-03-01), pages 1-73, XP052118752" relates to the selection of an application context relocation (ACR) scenario.

### SUMMARY

The invention is defined by the appended claims. Further aspects of the disclosure are described in the following.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a wireless transmit/receive unit (WTRU). Configuration information associated with one or more of a first network node, a second network node, and an application client (AC) may be received. The first network node and the second network node may be determined using the configuration information. The second network node may provide a service and may be associated with the first network node. One or more application context relocation (ACR) procedures for providing continuity for the service may be determined. These procedures may be based on a WTRU capability, a first network node capability, and a second network node capability. A selection request message may be sent to the first network node. The selection request message indicates an identifier for the second network node, a WTRU identifier, and the determined one or more ACR procedures. A selection response message may be received from the first network node. The message may indicate a request process status result.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a first network node. A selection request message may be received from a WTRU. The selection request message may indicate one or more ACR procedures, a second network node identifier, and a WTRU identifier. It may be determined, using the second network node identifier, that a second network node has subscribed to receive selection notifications. It may be determined, using the WTRU identifier, that the WTRU may be authorized to communicate with the second network node. A notification message may be sent to the second network node, which may indicate the requested one or more ACR procedures. A selection response message may be sent to the WTRU indicating a request processing status result.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a wireless transmit/receive unit (WTRU). Configuration information associated with at least an application client (AC) may be received. A first network node and a second network node may be determined using the configuration information. The second network node may be associated with the first network node. A selection request message may be sent to the first network node. The selection request message may indicate a request for an application context relocation (ACR) procedure from the first network node. The selection request message may indicate service continuity support information associated with the WTRU. A selection response message may be received from the first network node. The selection response message may indicates one or more ACR procedures that may be supported by the WTRU.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a first network node. A selection request message may be received from a wireless transmit/receive unit (WTRU). The selection request message may request a selection of application context relocation (ACR) procedures and may indicate service continuity capability information associated with the WTRU. One or more ACR procedures may be selected for providing continuity for a service based on service continuity capability information associated with the WTRU, the first network node, and a second network node. A list may be determined based on the selected one or more ACR procedures. The list may comprise at least the selected one or more ACR procedures. The selected one or more ACR procedures may be compatible with one or more of the WTRU, an application client (AC) of the WTRU, an edge enabler client (EEC) of the WTRU, the first network node, or the second network node. A selection response message may be sent to the WTRU that may indicate the list.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a wireless transmit/receive unit (WTRU). A first application context relocation (ACR) coordination message may be sent to a first network node when an ACR event may be detected. The ACR event may be detected in accordance with an ACR procedure. A second ACR coordination message may be received from the first network node. An ACR execution message may be generated based on the second ACR coordination message. The ACR execution message may be generated in accordance with the ACR procedure. The ACR execution message may be sent to at least one of the first network node or a second network node.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a first network node. A first application context relocation (ACR) coordination message may be received from at least one of a wireless transmit/receive unit (WTRU) or a second network node. An entity for executing an ACR procedure may be determined. The entity may be one of the first network node, the second network node, or the WTRU. A first coordination decision may be determined based on the determined entity and an identity of the WTRU. A second coordination decision may be determined based on the determined entity and an identity of the second network node. A second ACR coordination message may be sent to the WTRU. The second ACR coordination message may indicate the first coordination decision. A third ACR coordination message may be sent to the second network node. The third ACR coordination message may indicate the second coordination decision.

Systems, methods, and instrumentalities are disclosed herein for application context relocation (ACR) selection and/or coordination. An ACR selection function (ASF) may be used for selecting, communicating, and/or managing ACR procedures for service continuity between an application client on a WTRU (wireless transmit/receive unit) and an edge application server. An entity (e.g., EEC or EES) may act as an ASF. Acting as an ASF may include one or more of the following: selecting ACR procedures that may be used for an AC and EAS pair and producing an ACR-Detect-Decide list (e.g., ACR list, ACR identifiers, and/or ACR validity area); selecting an ACF entity if more than one ACR procedure is selected; communicating and/or sending ASF decisions (e.g., ACR-Detect-Decide list and/or ACF entity identifier) to other entities (e.g., EEC, EES, and/or EAS); or re-evaluating the selected ACR procedures when selection criteria and/or inputs change (e.g., WTRU location, WTRU planned route, WTRU mobility analytics, neighboring EDN ACR capabilities).

ACR Coordination Function (ACF) may be used for gating ACR execution when ACR procedures (e.g., concurrent ACR procedures) are used for service continuity between an application client on a WTRU and an edge application server. An entity (e.g., EEC or EES) may act as an ACF. Acting as an ACR coordination function (ACF) may include one or more of the following: receiving request(s) from entities (e.g., EEC, EES, and/or EAS). The request may indicate that an ACR is used (e.g., required) and may ask for permission to execute an ACR procedure; or sending a response to a requesting entity to indicate if the ACR procedure may be executed.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 shows an example of SA6 architecture for enabling edge application(s).
FIG. 3 shows an example of a high-level overview of application context relocation (ACR).
FIG. 4 shows an example of a high-level overview of application context relocation with an ACR selection function and an ACR coordination function.
FIG. 5 shows an example of application context transfer with application context transfer (ACT) authorization tokens.
FIG. 6 shows an example of an ACR selection function performed by an edge enabler server (EES).
FIG. 7 shows an example of ACR selection function performed by an edge enabler client (EEC).
FIG. 8 shows an example of ACR coordination function performed by an EES.
FIG. 9 shows an example of an ACR coordination function performed by an EEC.
FIG. 10 shows an example of an ACR selection function (ASF) and ACR coordination function (ACF) used in combination.

### DETAILED DESCRIPTION

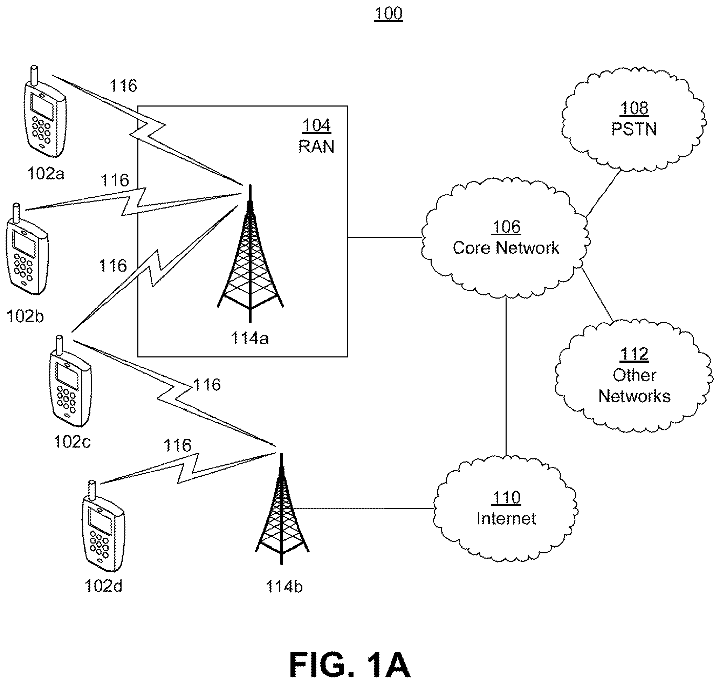

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (COMA), time division multiple access (TDMA), frequency division multiple access (FDMA), orthogonal FDMA (OFDMA), single-carrier FDMA (SC-FDMA), zero-tail unique-word OFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

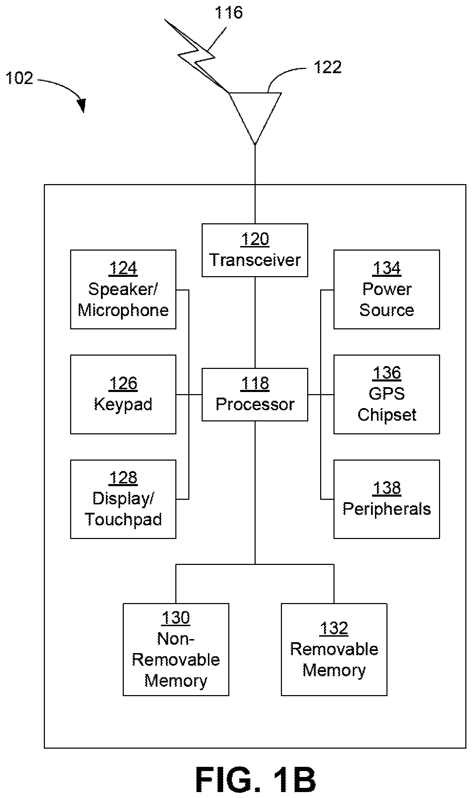

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

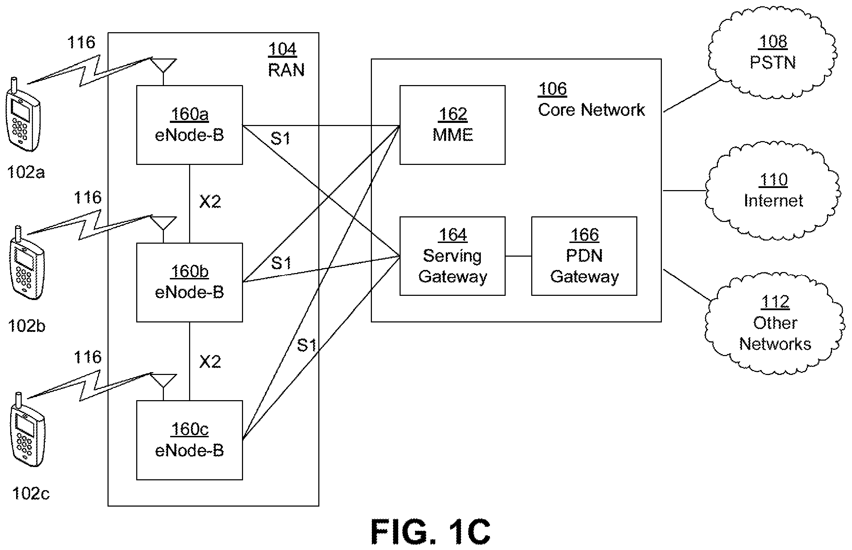

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

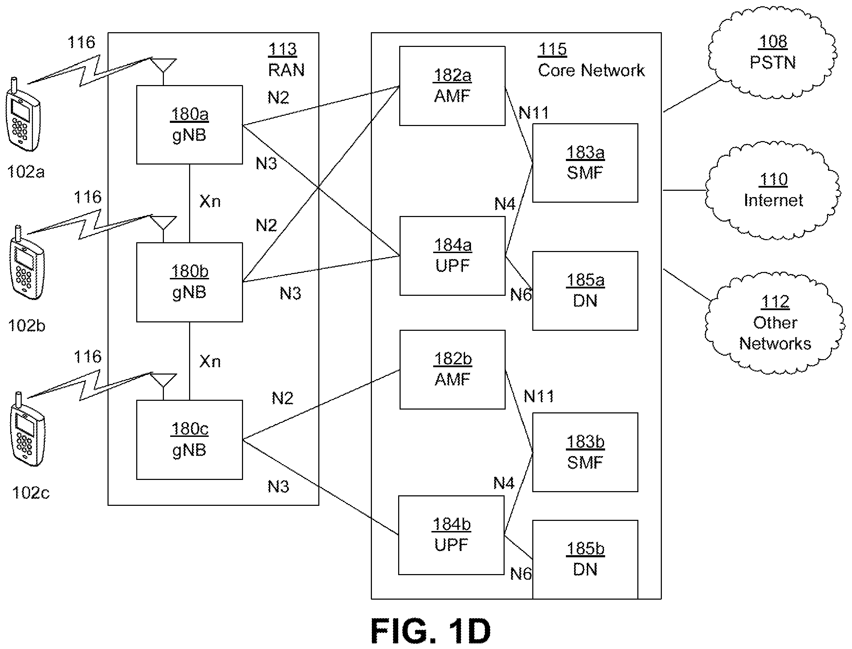

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c, substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Reference to a timer herein may refer to a time, a time period, tracking the time, tracking the period of time, etc. Reference to a timer expiration herein may refer to determining that the time has occurred or that the period of time has expired.

An application layer may be used for supporting edge services. As disclosed herein, an application layer may be provided.

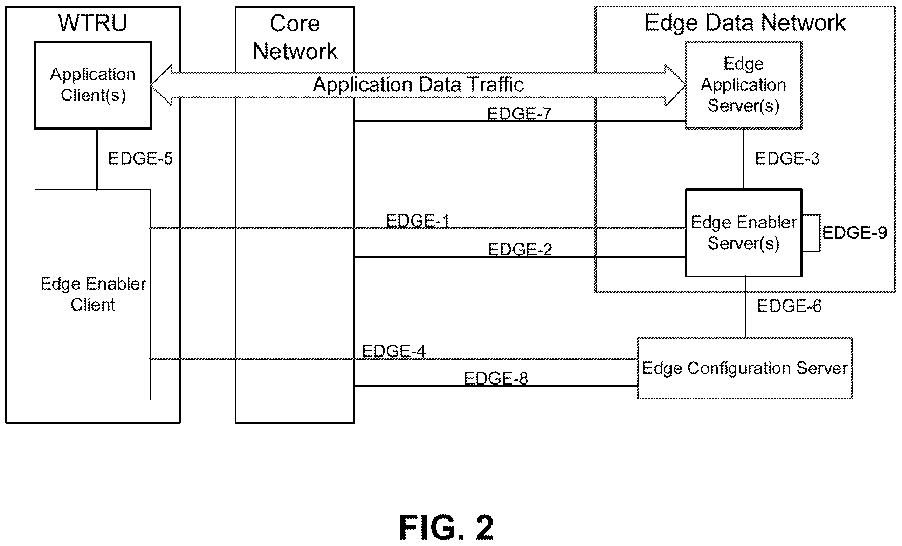

An architecture may be provided for enabling one or more edge applications. FIG. 2 shows an example of SA6 architecture for enabling edge application(s).

The components of the SA6 architecture may be described with respect to Table 1.

**Table 1 - SA6 edge enablement layer (EEL) entities**

| | | |
|---|---|---|
| Application Client (AC) | - User application residing on a WTRU. The AC may be an application that communicates with an edge application server (EAS). | |
| | - Cardinality: a WTRU may use multiple ACs concurrently | |
| Edge Enabler Client (EEC) | - Provides edge support to the ACs on the WTRU | |
| | - Cardinality: one or more EEC(s) per WTRU; one AC may use one EEC | |
| Edge Configuration Server (ECS) | - Provides supporting functions for EEC and/or Edge Enabler Servers (EES) to discover EES(es) providing certain EAS | |
| | - Cardinality: one or more ECS(s) for the network. | |
| Edge Enabler Server (EES) | - Provides supporting functions for edge application servers (EAS) and edge enabler client (EEC). | |
| | - In the context of a mobility/service continuity: | |
| | | ∘ the source-EES (S-EES) may be the EES used before mobility/ACR happens. |
| | | ∘ the target-EES (T-EES) may be the EES used after mobility/ACR has happened. |
| | - Cardinality: there may be one or more EES per EDN (Edge Data Network - aka DNN) - there are multiple EDNs in the network | |
| Edge Application Server (EAS) | - Application server resident in the EDN, which may be the software server providing a service to the application client. | |
| | - In the context of a mobility/service continuity: | |
| | | ∘ the source-EAS (S-EAS) may be the EAS used before mobility/ACR happens. |
| | | ∘ the target-EAS (T-EAS) may be the EAS used after mobility/ACR has happened. |
| | - Cardinality: there are multiple EAS per EDN - an EDN (e.g., each EDN) may include a different set of EASs; some EAS may serve a group of ACs/UEs while some may be exclusive to a single AC/UE. | |

A data network (DN) and/or a local area data network (LADN) may be provided. A system may inform the WTRU about available DNs and may provide information about the DN capabilities. A LADN information element (IE) may be provided. The LADN Information IE may be a mechanism by which the network may send data network names (DNN) to the WTRU and the geographical area where such DNNs may be accessed.

LADN Information (e.g., LADN service area information and/or LADN DNN) may be provided by the AMF to the WTRU during the registration procedure or the WTRU configuration update procedure. For a LADN DNN (e.g., each LADN DNN) configured in the AMF, the corresponding LADN service area information may include a set of tracking areas that belong to the registration area that the AMF assigns to the WTRU (e.g., the intersection of the LADN service area and the assigned registration area).

LADN information may be sent to the WTRU by the AMF when the WTRU indicates to the AMF that it is able to receive LADN information via a registration request.

Service continuity may be provided. For example, embodiments disclosed herein may provide service continuity.

If a WTRU moves to a location (e.g., new location), different EASs and/or EDNs may be more suitable for serving the ACs in the WTRU. Such mobility transitions may result in replacing the EAS in the source EDN (S-EAS) with an EAS in the target EDN (T-EAS).

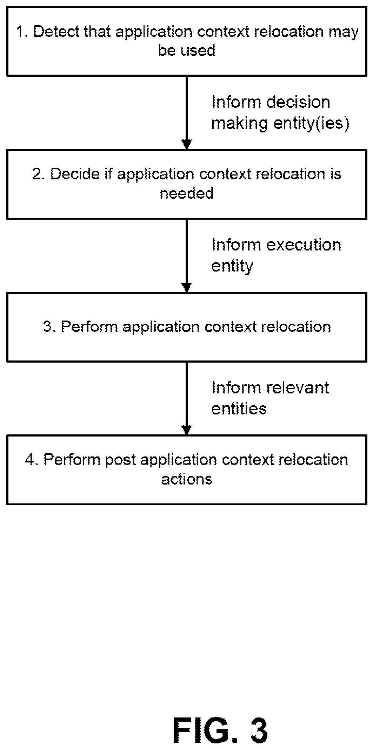

Replacing the S-EAS with the T-EAS may involve a procedure named application context relocation (ACR). 5 ACR procedures may be defined that follow the high-level flow as shown in FIG. 3.

An ARC may be provided. FIG. 3 shows an example of a high-level overview of ACR.

ACR detection and/or ACR decision phases may be performed by different entities depending on the ACR procedure. Table 2 may present a summary of detection and/or decision entities. As shown in the table, it may be possible to have multiple detection and/or decision entities concurrently. In other words, two or more different entities may independently detect that ACR is used and may independently decide which procedure may be performed.

**Table 2 - ACR detection and decision overview**

| Procedure Name | Initiation by EEC using regular EAS Discovery | EEC executed ACR via S-EES | S-EAS decided ACR | S-EES executed ACR | EEC executed ACR via T-EES |
|---|---|---|---|---|---|
| ACR Detection performed by | EEC | EEC | S-EAS (self or via S-EES ACR management notification) | EEC or EES or EAS | EEC |
| ACR Decision performed by | EEC | EEC | S-EAS | S-EES (self or via ACR determination from S-EAS or EEC) | EEC |

An ACR execution phase may vary depending on the ACR procedure. During the ACR execution phase, EEL entities may exchange multiple messages as shown in Table 3.

For a given AC and EAS pair, executing ACR procedures (e.g., two or more ACR procedures) may not be possible concurrently as the order and sequence of messages may be incompatible. An ACR (e.g., a single ACR procedure) may be executed for ACR to succeed.

**Table 3 - ACR execution overview**

| Procedure Name | Initiation by EEC using regular EAS Discovery | EEC executed ACR via S-EES | S-EAS decided ACR | S-EES executed ACR | EEC executed ACR via T-EES |
|---|---|---|---|---|---|
| ACR execution steps | 1- T-EAS discovery (EEC/T-EES) | 1- T-EAS discovery (EEC/T-EES) | 1-T-EAS discovery (S-EAS/T-EES) | 1-T-EAS discovery (S-EES/T-EES) | 1-T-EAS discovery (EEC/T-EES) |
| | 2- ACR initiation (EEC/S-EES) | 2- ACR initiation (EEC/S-EES) | 2-T-EAS declaration (S-EAS/S-EES) | 2- EEC context relocation (S-EES/T-EES) | 2- ACR initiation (EEC/T-EES) |
| | 3- EEC context relocation (S-EES/T-EES) | 3- EEC context relocation (S-EES/T-EES) | 3- EEC context relocation (S-EES/T-EES) | 3- Target information notification (S-EES/EEC) | 3- EEC context relocation (T-EES/S-EES) |
| | 4- Application context relocation (S-EAS/T-EAS) | 4- Application context relocation (S-EAS/T-EAS) | 4- Target information notification (S-EES/EEC) | | 4- Application context relocation (T-EAS/S-EAS) |
| | | | | 4- Application context relocation trigger (S-EES/S-EAS) | |
| | | | 5- Application context relocation (S-EAS/T-EAS) | | |
| | | | | 5- Application context relocation (S-EAS/T-EAS) | |

Post-ACR processing may be similar for ACR procedures (e.g., all ACR procedures) as shown in Table 4.

**Table 4 - Post-ACR processing overview**

| Procedure Name | Initiation by EEC using regular EAS Discovery | EEC executed ACR via S-EES | S-EAS decided ACR | S-EES executed ACR | EEC executed ACR via T-EES |
|---|---|---|---|---|---|
| ACR cleanup steps | 5- ACR status (S-EAS/S-EES) | 5- ACR status (S-EAS/S-EES) | 6- ACR status (S-EAS/S-EES) | 6- ACR status (S-EAS/S-EES) | 5- ACR status (T-EAS/T-EES) |
| | 6- ACR status (T-EAS/T-EES) | 6- ACR status (T-EAS/T-EES) | 7- ACR status (T-EAS/T-EES) | 7- ACR status (T-EAS/T-EES) | 6- ACR complete (T-EES/EEC) |
| | 7- ACR complete (S-EES/EEC) | 7- ACR complete (S-EES/EEC) | 8- ACR complete (S-EES/EEC) | 8- ACR complete (S-EES/EEC) | |
| | | | | | |

One or ACR procedures may be provided.

Table 5 may illustrate that the *"EEC executed ACR via T-EES"* ACR procedure (e.g., only the "EEC *executed ACR via T-EES" ACR* procedure) may succeed if triggered by a WTRU movement into or out of a data network (e.g., DN or LADN) service area. Other ACR procedures (e.g., all other ACR procedures) may fail when the WTRU moves out of the service area of a source LADN based on the EEC no longer being able to communicate with the S-EES which may reside in the source LADN.

**Table 5 - Failure cases for ACR without SCP**

| Procedure Name | Initiation by EEC using regular EAS Discovery | EEC executed ACR via S-EES | S-EAS decided ACR | S-EES executed ACR | EEC executed ACR via T-EES |
|---|---|---|---|---|---|
| DN -> DN | OK | OK | OK | OK | OK |
| ON -> LADN | OK | OK | OK | OK | OK |
| LADN -> DN *(UE TAI is outside* of *LADN)* | EEC unable to access S-EES (step 2) | EEC unable to access S-EES (step 2) | EEC unable to access S-EES (step 4) | EEC unable to access S-EES (step 3) | OK |
| | S-EES unable to access EEC (step 7) | S-EES unable to access EEC (step 7) | S-EES unable to access EEC (step 8) | S-EES unable to access EEC (step 8) | |
| LADN -> LADN *(UE TAI is outside* of *source LADN)* | EEC unable to access S-EES (step 2) | EEC unable to access S-EES (step 2) | EEC unable to access S-EES (step 4) | EEC unable to access S-EES (step 3) | OK |
| | S-EES unable to access EEC (step 7) | S-EES unable to access EEC (step 7) | S-EES unable to access EEC (step 8) | S-EES unable to access EEC (step 8) | |

Service continuity planning (SCP) issues may be provided.

SCP may be a variant of an ACR procedure (e.g., each ACR procedure) that aims to prepare the target EAS before WTRU mobility involving ACR.

Service continuity planning may be defined as an edge enabler layer value-add feature providing support for seamless service continuity, e.g., when information about planned, projected, and/or anticipated behavior is available at EESs or provided by EECs. In service continuity planning, the application context may be duplicated and/or sent from the S-EAS to the T-EAS before the WTRU moves to the expected location.

Table 6 illustrates that the ACR procedures (e.g., all the ACR procedures) may fail during ACR execution and/or ACR cleanup. ACR execution may fail if triggered by a projected WTRU movement into the service area of a target LADN based on the EEC not being able to communicate with the T-EES, which resides in the target LADN. ACR cleanup may fail if triggered by a WTRU movement out of the service area of a source LADN based on the EEC no longer being able to communicate with the S-EES, which may reside in the source LADN.

**Table 6 - Failure cases for ACR with SCP**

| Procedure Name | Initiation by EEC using regular EAS Discovery | EEC executed ACR via S-EES | S-EAS decided ACR | S-EES executed ACR | EEC executed ACR via T-EES |
|---|---|---|---|---|---|
| DN -> DN (SCP) | OK | OK | OK | OK | OK |
| DN -> LADN (SCP) (UE TAI is outside of LADN) | Planning: EEC unable to access T-EES (step 1) | Planning: EEC unable to access T-EES (step 1) | OK | OK | Planning: EEC unable to access T-EES (step 1) |
| LADN -> DN (SCP) *(UE TAI is outside* of *LADN)* | Cleanup: S-EES unable to access EEC (step 7) | Cleanup: S-EES unable to access EEC (step 7) | Cleanup: S-EES unable to access EEC (step 8) | Cleanup: S-EES unable to access EEC (step 8) | OK |
| LADN -> LADN (SCP) *(UE TAI is outside of destination LADN)* | Planning: EEC unable to access T-EES (step 1) | Planning: EEC unable to access T-EES (step 1) | Cleanup: S-EES unable to access EEC (step 8) | Cleanup: S-EES unable to access EEC (step 8) | Planning: EEC unable to access T-EES (step 1) |
| | Cleanup: S-EES unable to access EEC (step 7) | Cleanup: S-EES unable to access EEC (step 7) | | | |

As described herein, service continuity procedures may be provided.

ACR scenarios may not support concurrent execution. For example, if multiple ACR scenarios are used concurrently, edge enablement layer (EEL) entities (e.g., EEC, EES, and/or EAS) may simultaneously detect and decide to trigger the execution of an ACR procedure. ACR procedures may not support concurrent execution, resulting in undefined behavior that leads to unsuccessful service continuity for the WTRU.

In examples, none of the ACR scenarios may succeed with LADN use cases (e.g., all LADN use cases, such as entering or leaving). For example, LADN may be data networks with an associated service area. A WTRU may communicate with a LADN when (e.g., only when) it is located inside the LADN service area. ACR scenarios without SCP may involve (e.g., require) a WTRU to communicate with EAS/EES located in a LADN after the WTRU has left the service area, e.g., while ACR scenarios with SCP may involve (e.g., require) a WTRU to communicate with EAS/EES located in a LADN before the WTRU enters the LADN's service area. Both these conditions may result in a failed ACR procedure and unsuccessful service continuity for the WTRU.

When ACR is performed, the application context may be moved from a first entity (e.g., EES or EAS) to a second entity (e.g., EES or EAS). It may be that the security capabilities of the first entity and second entity are different. When selecting an ACR procedure to execute, there may be a need to coordinate what security procedures should be used to communicate with the second entity (e.g., the target entity), and there may be a need to exchange security credentials (e.g., tokens, certificates, etc.) with the ACR participant entities.

ACR procedures may lead to service continuity failures if used concurrently and/or with LADNs.

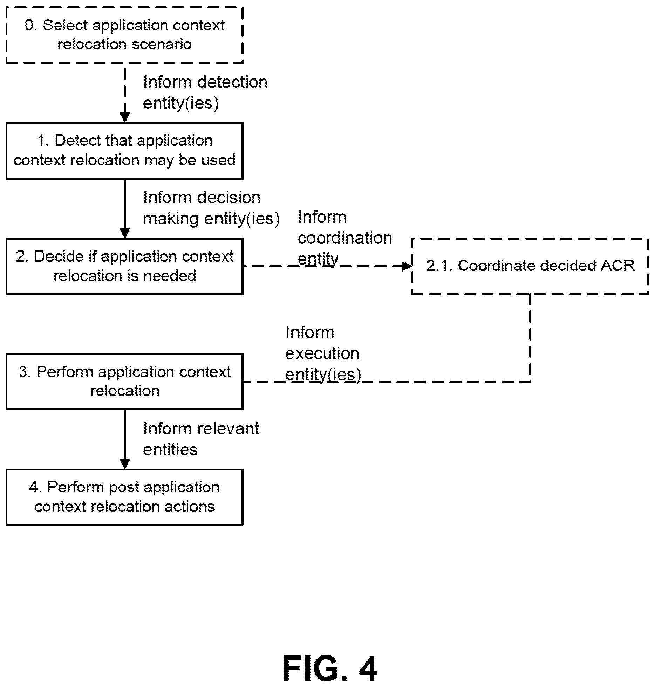

An ACR selection function (ASF) may be defined for selecting ACR scenario(s) to be used for service continuity. ASF may be represented by 0, as shown in FIG. 4. The output(s) of the ASF may be a list of 0 or more ACR procedure(s) that may be used to perform 1 and 2 and the selection of an ACR Coordination Function (ACF) when multiple ACR procedures are in the list.

The list of procedures that may be used for 1 and 2 may be called an ACR-Detect-Decide list.

Multiple ACR procedures may perform 1 and 2 concurrently. Multiple ACR procedures may be used concurrently to detect that ACR may be involved (e.g., required) for an AC and an EAS, and multiple ACR procedures may be used concurrently to decide that ACR may be needed for an AC and an EAS. As described herein, an ACR procedure (e.g., a single ACR procedure) may be allowed to proceed to the execution phase in 3.

When the ASF produces an ACR-Detect-Decide list that includes more than one ACR procedure and when multiple ACR procedures concurrently detect and/or decide to perform an ACR, a single ACR procedure may be allowed to reach execute stage. Gating of the ACR execution may be performed by the ACR Coordination Function (ACF), which may be described herein. An example of ACR selection performed by the ASF may be informing ACR decision entities (e.g., EEC, EES, and/or EAS) of which ACR procedure may perform detection and decision. An example of ACR coordination performed by the ACF may be to allow one ACR procedure (e.g., only one ACR procedure) to reach the execution phase.

An ACF may be defined for coordinating ACR scenario execution if concurrent ACR procedures are used for service continuity (e.g., multiple ACR procedures in the ACR-Detect-Decide list). The ACF may be represented by 2.1, as shown in FIG. 4.

FIG. 4 shows an example of a high-level overview of application context relocation with an ACR selection function and an ACR coordination function.

The ASF and/or ACF may be used for a ACR, as described herein. The ASF and the ACF may be used concurrently for a ACR, as described herein.

The ASF may be a logical function that may be implemented in a standalone server or may reside in an EEC, an EES, an EAS, or in any other server part of or interacting with the EEL.

The ACF may be a logical function that may be implemented in a standalone server or may reside in an EEC, an EES, an EAS, or in any other server part of or interacting with the EEL.

An ASF may be provided.

The ACR selection function may perform one or more operation(s) to ensure that EEL entities are aligned on what ACR procedure(s) are to be used for an AC residing on a WTRU with a session to an EAS residing in an EDN (e.g., DN or LADN).

The ASF roles may include one or more of the following: to select ACR procedure(s) that may be used for an AC and EAS pair (e.g., each AC and EAS pair) and produce an ACR-Detect-Decide list; to select an ACF entity if more than one ACR procedure is selected; to communicate ASF decisions (e.g., an ACR-Detect-Decide list and/or an ACF entity) to the appropriate entities; or to re-evaluate a selected ACR procedure(s) when selection criteria and/or inputs change.

An ACR procedure may be selected.

ACR procedure selection may be performed by the ASF to determine an ACR-Detect-Decide list and an ACF entity. This procedure may result in one of the following outcomes: no ACR procedure is selected for the list, a single ACR procedure is selected for the list, or multiple ACR procedures are selected for the list.

The ASF may include no ACR procedure in the ACR-Detect-Decide list when ACR is not involved (e.g., needed) between an AC and its EAS counterpart or when there is no common ACR procedure supported by the involved EEL entities (e.g., AC, EEC, EES, and/or EAS).

The ASF may include an ACR procedure (e.g., a single ACR procedure) in the ACR-Detect-Decide list when there is a common ACR procedure (a single common ACR procedure) supported by the involved EEL entities (e.g., AC, EEC, EES and/or EAS). In examples, the ACR procedure (e.g., the single ACR procedure) may be included if there are multiple common ACR procedures supported and if the ASF determines there is a benefit in using the ACR procedure (e.g., the single ACR procedure). For example, selecting the ACR procedure (e.g., the single ACR procedure) may minimize processing and/or messaging by minimizing requests for coordination (e.g., eliminating a need for coordination). For example, selecting the ACR procedure (e.g., a single ACR procedure) may avoid using ACR procedures that may be incompatible with a source/destination edge data network type (e.g., DN and/or LADN).

The ASF may select multiple ACR procedures when there are multiple common ACR procedures supported by the involved EEL entities (e.g., AC, EEC, EES, and/or EAS) and when the ASF determines there is a benefit in using multiple concurrent ACR procedures. It may be beneficial to select multiple ACR procedures, for example, to improve ACR detection by using multiple ACR detection entities. For example, it may be beneficial to select multiple ACR procedures to support WTRU transitions where the involved source and/or destination edge data network types (e.g., DN and/or LADN) involve the use of different ACR procedures.

ACR procedure selection performed by the ASF may be based on the EEL participants (e.g., AC, EEC, EES, and/or EAS). ACR capabilities may include SCP capabilities and/or the current and surrounding EDN type (e.g., DN and/or LADN). For example, the EAS service continuity support may be found in the EAS profile. The EES service continuity support may be found in the EES profile. The EEC service continuity support may be provided by the EEC in the registration request or the EAS discovery request, and the AC service continuity support may be found in the AC profile. For example, the EDN type may be determined by the EES topological and/or geographical service area in the EES profile or the EAS topological and/or geographical service area in the EES profile.

The WTRU location (e.g., geographical and/or topological) ACR procedure selection may be based on the planned route and/or trajectory of an EEC. For example, if the EEC is hosted in a vehicle or drone, the EEC may provide the planned route and/or trajectory to the ASF. The ASF may use this information to determine what ACR procedures may be supported at the EEC's future location.

ACR procedure selection may be based on data analytics information obtained from the network data analytics function (NWDAF) about the WTRU that hosts the EEC. For example, the ASF may use WTRU mobility analytics information to determine what ACR procedures may be supported at the EEC's future location. The ASF may invoke the Nnwdaf_AnalyticsSubscription or Nnwdaf_AnalyticsInfo services to obtain WTRU mobility statistics and/or predictions.

ASF may assign a globally unique identifier to an entry (e.g., each entry) in the ACR-Detect-Decide list to identify a selected ACR procedure (e.g., each ACR procedure). This ACR identifier may be used for ACR management operations such as re-evaluating or terminating an ACR. The ACR identifier may be used when an active ACR (e.g., detecting and deciding) reports an ACR decision to the ACF.

ASF may assign a validity area and/or a location to an ACR entry (e.g., each ACR entry) in the ACR-Detect-Decide list, for example, to reduce the scope of an ACR procedure. The ACR detection and/or decision entities may use this validity area to decide when to start and/or stop ACR detection and/or decision based on the WTRU location. The WTRU location may be a geographical location (e.g., geographical coordinates and/or civic address) or a topological location in the network (e.g., a cell identifier, tracking area identifier (TAI), or public land mobile network (PLMN)). This service area capability may allow an ASF to perform ACR planning according to the WTRU location. For example, when a WTRU is in a location with neighboring LADNs, the ASF may select a specific ACR procedure that is compatible with LADNs, otherwise, the ASF may select a different ACR procedure. For example, an ASF may perform ACR planning when neighboring EAS/EES support different ACR procedures in neighboring EDNs.

An ACF entity may be selected.

The ACF entity may be a node in the system and/or may be dynamically selected by the ASF. When a ACF is known by one or more participants (e.g., every participant), the ASF may not request that the ACF is selected (e.g., it may not need to be selected by the ASF).

When ACF is dynamically selected by the ASF, the ACF entity selection may result in one of the following outcomes: no ACF entity is selected, or one ACF entity is selected.

The ASF may select no ACF entity if an ACR is not used or if an ACR procedure (e.g., a single ACR procedure) is selected (e.g., the ACR-Detect-Decide list includes 0 or 1 entries).

The ASF may select an ACF entity (e.g., one ACF entity) if the ACR-Detect-Decide list includes multiple ACR procedures to be used concurrently.

The output of the ACF selection procedure may be the identity of an ACF (e.g., FQDN or IP address of an ACF).

Communicating ASF decisions may be provided.

ACR procedure selection may be communicated to the ACR detection and decision entities. ACR detection and decision entities may be the EEC, the EES, and/or the EAS. The ASF may provide the ACR-Detect-Decide list to the EEC, the EES, and/or the EAS.

For ACR detection entities, based on receiving the ACR-Detect-Decide list, an ACR detection entity may initiate ACR detection processing if (e.g., only if) the selected ACR procedure mandates it. If multiple ACR procedures are selected, the ACR detection entity may initiate ACR detection processing for selected ACR procedures (e.g., all selected ACR procedures) that mandate it. If ACR is not used or if the selected ACR procedure does not require ACR detection entity participation, it may not initiate the detection processing.

For ACR decision entities, based on receiving the ACR-Detect-Decide list, an ACR decision entity may initiate ACR decision processing (e.g., wait for detection) if (e.g., only if) the selected ACR procedure mandates it. If multiple ACR procedures are selected, the ACR decision entity may use the selected ACF entity. If ACR is not used or if the selected ACR procedure does not require ACR decision entity participation, it may not initiate the decision processing.

ACF entity selection may be communicated to the ACR decision entities. The ACR decision entities may be the EEC, the EES, and/or the EAS.

For ACR decision entities, based on receiving the ACF entity selection, an ACR decision entity may configure its ACR decision processing with the selected ACF entity. If an ACF entity is selected, the ACR decision entity may inform the ACF entity of its ACR decision and may not proceed to trigger the ACR execution phase until it receives a confirmation from the ACR coordination entity that it may proceed. If no ACF entity is selected, the ACR decision entity may proceed to trigger the ACR execution phase.

The AC may be informed of the ACR-Detect-Decide list and/or ACR coordination entity.

A re-evaluation of a selected ACR procedure may be provided.

The ASF may periodically re-evaluate (e.g., need to periodically re-evaluate) the ACR-Detect-Decide list, for example, if the WTRU moves in the network if the neighboring EDN ACR capabilities change, if the WTRU planned route changes, or if the ACR capabilities of the EEL participants change.

When the ASF performs a re-evaluation, the ASF may generate an ACR-Detect-Decide list (e.g., new ACR-Detect-Decide list) and may select an ACF entity in the same manner as described herein. The re-evaluated list may be the same as the initial list, may be a partially modified list, or may include a full set of entries (e.g., new entries). An unchanged list entry may be an entry that has a pre-existing globally unique identifier, and an entry (e.g., new entry) may be an entry that has a globally unique identifier (e.g., new globally unique identifier).

When the ASF communicates the re-evaluated ACR-Detect-Decide list, the recipient(s) may react based on the received ACR-Detect-Decide list. For example, ACR procedures that have their identifier removed from the list may be stopped. ACR procedures (e.g., new ACR procedures) that have been added may be started. An existing ACR procedure identifier assigned to an ACR procedure (e.g., new ACR procedure) may result in an ACR procedure being stopped, and another started.

ACR Coordination Function (ACF) may be provided.

The ACR Coordination Function may perform one or more operation(s) to prioritize ACR procedure execution when multiple ACR procedures have been selected for an AC residing on a WTRU with a session to an EAS residing in an EDN (e.g., DN or LADN).

ACF's role may be to select an ACR procedure for execution when ACR has been detected and/or decided for an AC and EAS pair.

Coordination of ACR procedure may be provided.

ACR procedure coordination performed by the ACF may result in one of the following outcomes: ACR is allowed to execute, or ACR is not allowed to execute.

The ACF may prevent an ACR procedure from executing when another ACR is executed for a given AC and EAS pair. For example, when ACR procedures (e.g., two or more ACR procedures) concurrently detect and decide that ACR is needed, the ACF may decide to allow one of the ACR procedures to execute and may deny execution of the other one(s). The ACF may prevent an ACR procedure from executing if it determines that the ACR procedure will fail due to, for example, unsupported WTRU movements or projected movements as described herein.

The ACF may allow an ACR procedure to execute when an ACR procedure is the first one to detect and/or decide that an ACR is needed. For example, if a single ACR procedure detects and/or decides to trigger ACR execution for an AC and EAS pair, the ACF may allow the ACR procedure to execute. In cases where multiple ACRs are used concurrently, the ACF may decide to allow one ACR procedure to execute and deny the others.

The ACF may coordinate ACR execution based on different conditions when concurrent ACR decisions are reported. For example, the ACF may allow ACR execution for the first reported ACR. In such a case, the ACR decision reporting timestamp may be used to determine the ACR procedure for ACR execution. For example, the ACF may allow ACR execution based on a preferred ACR list. In such a case, the ACR procedure priority in the preferred ACR list may be used to determine the ACR procedure for ACR execution. For example, the ACF may allow ACR execution based on the source or target EDN type (e.g., DN and/or LADN). In such a case, the source or target EDN type may be obtained from the WTRU registration information, from the EAS profile, or from the EES profile. For example, the ACF may allow ACR execution based on the WTRU location. In such a case, the WTRU location may be obtained from the WTRU or from the network.

ACR procedure coordination performed by the ACF may involve (e.g., require) the EEL participant (e.g., AC, EEC, EES, and/or EAS) ACR and SCP capabilities, the source EDN type (e.g., DN or LADN), the destination EDN type (e.g., DN or LADN), the WTRU location, the detection trigger (e.g., WTRU movement or projected WTRU movement), and/or the identifier of the ACR procedure reporting an ACR detection and/or decision to the ACF.

Security for ACR may be provided.

As described herein, the ASF may be provided with the ACR capabilities of an entity (e.g., an AC, EEC, EES, and/or EAS). ACR capabilities may include a list of the ACR procedures by the entity. The ACR Capabilities may include a list of the security procedures that are supported by the entity.

In examples, an EEC may discover a T-EAS and send an ACR coordination request. The ACR coordination request may indicate the identity of the T-EAS. The ACR coordination request may include the ACR capabilities of the EEC. The EES may receive the ACR coordination request and use the ACR capabilities of the EEC and T-EAS to determine an ACR coordination response. The EES may have been configured with the ACR capabilities of the T-EAS. The EES may send an ACR coordination response to the EEC. The ACR coordination response may notify the EEC that an ACR procedure has been selected for execution. The ACR Coordination response may trigger the entity to establish a secure connection with the target entity (e.g., T-EAS or T-EES). The ACR coordination response may provide the entity with information about the target entity. The information about the target entity may include the identity of the target entity, security credentials that may be used when establishing security with the target entity, an indication of what procedures are supported by the target entity, and/or an indication of what security procedure may be used to establish security with the target entity. Sending the security credential in the ACR coordination response may result in the EEC not performing (e.g., needing to perform) a second procedure to obtain the security credential from an ECS.

After the ACR procedure is decided, the security procedure may be performed between the entity (e.g., EES and/or EAS) in the source EDN and an entity (e.g., EES and/or EAS) in the target EDN to protect the application context transport from the S-EAS to T-EAS. Security procedures may be performed between the AC and/or EEC to the T-EES and T-EAS. Depending on the trust domains of the source EDN and the target EDN and deployment scenarios, the security procedure may decide if the WTRU uses (e.g.,) and authentication (e.g., new authentication) and authorization in the service area (e.g., new service area) or the AKMA/generic bootstrapping architecture (GBA) be used to reboot the security credentials to be used in the target EDN. The security procedure may generate tokens for the authorization of the AC and/or for the EEC to access the T-EAS.

If the ECS does not change during the ACR procedure, the EEC may establish security protection via TLS with credentials (e.g., certificate, AKMA, and/or GBA-based) with the ECS and may receive the authorization token to be used with the EES in the target EDN. Depending on the security (e.g., security requirement), a WTRU authentication (e.g., new WTRU authentication) may be performed with the target EDN, and an AKMA/GBA procedure (e.g., new AKMA/GBA procedure) may be performed. If no WTRU authentication (e.g., new WTRU authentication) is used (e.g., needed), the WTRU may use the existing AKMA/GBA credentials with the ECS and/or EES in the target EDN to set up the security connection and receive an authorization token (e.g., new authorization token) to be used with the target EES.

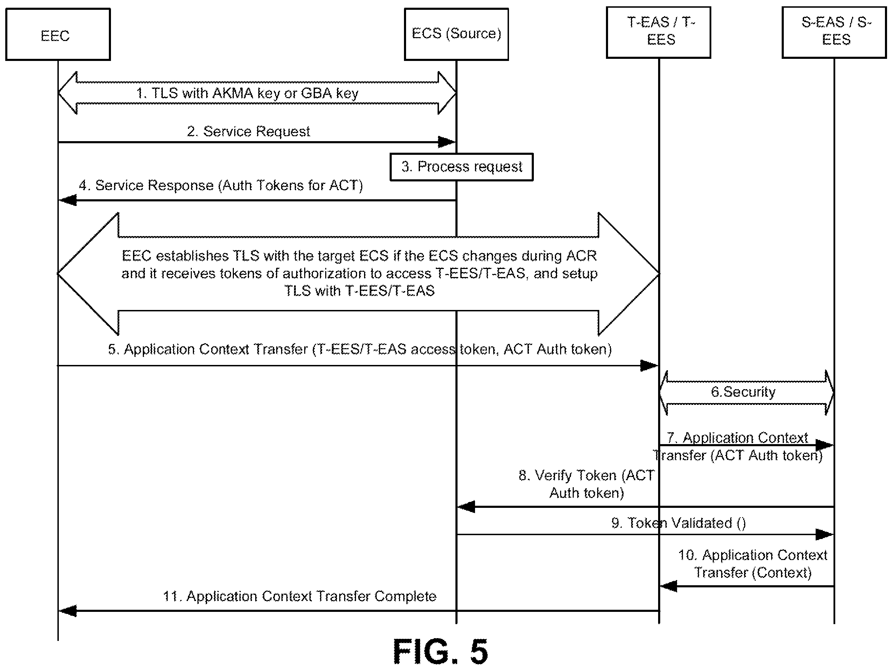

FIG. 5 shows an example of application context transfer with ACT authorization tokens.

As shown in FIG. 5, a procedure of application context transfer may be used S-EAS to T-EAS (e.g., S-EES to T-EES if needed) with one or more of the following procedures discussed below.

At 1, the EEC may establish a secure connection with the source ECS, which may be based on TLS setup with AKMA or GBA pre-shared key. Depending on the configuration, a reauthentication and/or AKMA/GBA may be used (e.g., needed) when the AC receives the ACR selection message.

At 2, The AC may receive the ACR selection message, and this message may trigger the EEC to start ACT. The AC may decide to initiate the transfer of the application context from the S-EAS to the T-EAS. The EEC may initiate a service provisioning request to the ECS to request tokens for T-EES authorization and authorization of application context transfer authorization from the S-EAS to T-EAS (e.g., ACT authorization tokens). The tokens may have been received via the ACR selection message.

At 3, ECS may process the request and may generate the requested tokens after authorization of EEC. The ACT authorization token may include one or more of the following: AC ID, S-EAS ID, T-EAS ID, ECS ID, token validity time, action authorized, etc. The ECS may send the tokens and ACT authorization tokens to the AC/EEC. The AC/EEC may establish TLS with the target ECS if the ECS changes during ACR, and it may receive tokens of authorization to access T-EES/T-EAS and set up TLS with T-EES/T-EAS.

At 5, the AC/EEC may send an application context transfer request to the T-EAS, and the request may include T-EES access authorization tokens and ACT authorization tokens. At 6, in examples, the T-EAS and S-EAS may set up the security connection (e.g., TLS connection). At 7, the T-EAS may authorize the AC with an EAS access token and may send the ACT authorization token to the S-EAS. At 8, based on receiving the ACT request from the T-EAS, the S-EAS may send the ACT authorization token to the ECS for validation. At 9, after the ECS validates (e.g., successfully validates) the ACT authorization token, the ECS may respond back to S-EAS with acknowledgment. At 10, the S-EAS may transfer the AC application context to the T-EAS. At 11, the T-EAS may send the ACT complete message to the AC/EEC.

An EES performing ASF may be provided.

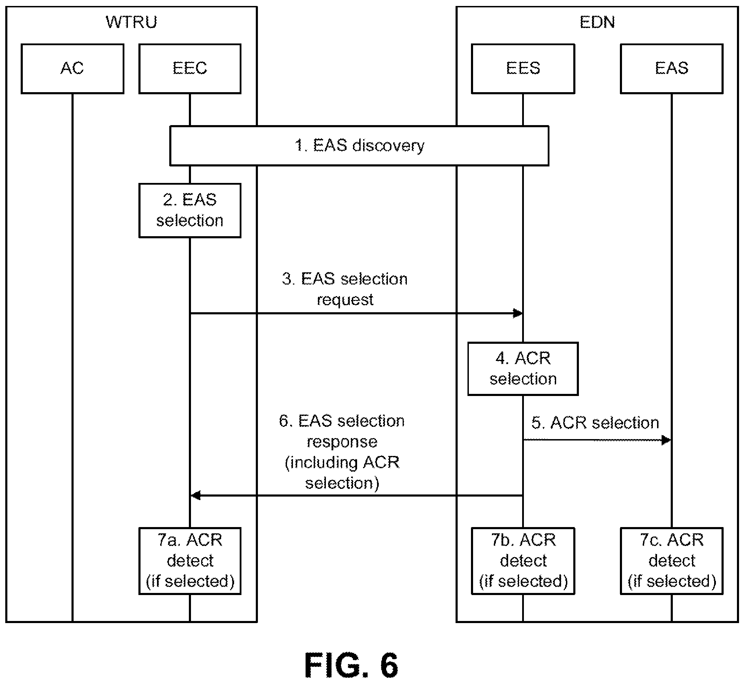

The ACF and ASF may be logical functions that may be part of other logical functions. FIG. 6 shows the ACR selection function, e.g., performed by an EES.

FIG. 6 shows an example of an ACR selection function performed by an EES. The selection of ACR scenario(s) may be performed by the EES (e.g., a first network node) for a given AC and the selected EAS (e.g., a second network node) from one or more supported ACR scenarios of an AC, an EEC, the selected EES, and the selected EAS. The one or more supported ACR scenarios may include a common supported ACR scenario of the AC, the EEC, the selected EES, and the selected EAS. The EES may receive configuration information from a first network node, a second network node, and an application client. The EES may determine a first network node and a second network node using the configuration information, and the second network node may be associated with the first network node.

One or more of the following may apply to the ACR selection function performed by an EES: the EES may be pre-configured to perform ASF; the AC profile may be provisioned in EEC; or the AC profile may include AC service continuity support information element (IE) with a list of supported and/or preferred ACR scenarios (e.g., the AC profile may specify SCP capabilities for each supported and/or preferred ACR scenario).

One or more of the following may apply to the ACR selection function performed by an EES.

At 1, The EEC may perform the EAS discovery procedure as described herein. The EEC may obtain a list of EAS that meet the EEC criteria specified via the EAS discovery request. The EEC may perform EAS discovery with multiple EES to discover EAS that may be available in different EDNs.

At 2, the EEC may select an EAS (e.g., one EAS) from the list of EAS that were discovered. The EEC may send an EAS selection request to the EES where the selected EAS is registered. The term "EAS selection request" and "EAS information provisioning request" may be used interchangeably.

At 3, the EEC may send a selection request message to the first network node, and the selection request message may request from the first network node an ACR procedure and indicate service continuity support information associated with the EEC. The selection request may indicate a security credential, a WTRU identifier, an application client identifier, and/or an application client profile. The selection request message may include an application client (AC) intent, and the AC's intent may be to communicate with the second network.

This request may indicate the AC's intent to use the selected EAS and may include one or more of the following information elements. The request may include the selected EAS ID that identifies the EAS that has been selected to be used by the AC. The request may include the selected EAS endpoint that identifies how to communicate with the selected EAS (e.g., URI, FQDN, IP address, etc.). The request may include the WTRU identifier that identifies the hosting WTRU (e.g., GPSI or identity token). The request may include the EEC identifier that identifies the EEC, e.g., as there may be multiple EEC collocated on a single WTRU. The request may include the EEC service continuity support that identifies ACR procedures supported and/or preferred by the EEC, including SCP capabilities and including the EEC's willingness to perform ACF functionality. The request may include the security credentials that resulted from an authorization (e.g., successful authorization) for the edge computing service. The request may include the AC profile information that includes AC service continuity support.

An EAS provisioning request may comprise an ACR scenario selection request. In an ACR scenario selection request, the EES may be informed (e.g., by the EEC) to perform ACR scenario selection. At 4, based on the reception of the EAS selection request (e.g., from the EEC), the EES may proceed in selecting ACR procedures (e.g., selecting the ACR scenario list) that are compatible with the AC, EEC, EES and/or EAS by using one or more of the following information: the AC service continuity support information element from the AC profile; the EEC service continuity support information element as defined in the EEC registration request or in the EAS discovery request (e.g., EEC context defined in may not include service continuity support information and may be added); the EES service continuity support known at the EES; or the EAS service continuity support information element from the EAS profile.

SCP capabilities and/or ACR preference may be considered in ACR selection and may be included in service continuity support information. The EES may consider the EEC and EAS's willingness to participate, as ACF may be included in the EEC context and EAS profile. The EES may consider one or more of the following information to select ACR procedures: the current EDN type (e.g., DN or LADN), which may be derived from EES topological and/or geographical service area in the EES profile or the EAS topological and/or geographical service area in the EES profile; the EDN type of the surrounding EDNs which may be derived from the EES topological and/or geographical service area in the EES profile (e.g., surrounding EES may be obtained from the ECS); or the WTRU location (e.g., geographical and/or topological) which may be obtained as described herein. After establishing the ACR-Detect-Decide list, the EES may assign a globally unique identifier to an ACR (e.g., each ACR) present in the list. This identifier may be used for ACR management , for example, when ACR may be re-evaluated, terminated, or when an ACR reports detection of the ACF. The EES may assign an ACR validity area (e.g., geographical and/or topological) to an ACR (e.g., each ACR) present in the list. This identifier may be used for enabling or disabling selected ACR procedures based on the WTRU presence in a defined area.

At 5, the EES may send an ACR selection request to the selected EAS. In examples, the EES may send an ACR selection notification to the selected EAS if the subscribe-notify model is used (e.g., if the EAS has subscribed). The EES may determine one or more ACR procedures for providing continuity for a service based on the requested ACR procedure, the service continuity support information associated with the WTRU, the first network node, and a second network node. The one or more ACR procedures may comprise the requested ACR procedure. The EES may determine provisioning information for the WTRU.

The request or notification may include one or more of the following information elements: the ACR-Detect-Decide list (e.g., including the globally unique identifier associated with selected ACR procedures (e.g., each ACR procedure and including the ACR validity area associated with selected ACR procedures (e.g., each ACR procedure); the selected ACF identity (e.g., FQDN, IP address, etc.); the security credentials resulting from an authorization (e.g., successful authorization) for the edge computing service; the AC identifier that uniquely identifies the AC; or the WTRU identifier of the hosting WTRU (e.g., GPSI or identity token).

At 6, the EES may send an EAS selection response to the EEC. The EEC may receive a selection response message from the first network node, wherein the selection response message indicates one or more ACR procedures, and the ACR procedures may be supported by the WTRU and include the requested ACR procedure. The EES may send a selection response message to the WTRU, and the selection response message may indicate the determined one or more ACR procedures.

The response may include one or more of the following information elements (e.g., in the EAS information provisioning response): the ACR-Detect-Decide list (e.g., including for an ACR (e.g., each ACR) in the list a globally unique identifier and including for an ACR (e.g., each ACR) in the list a validity area such as geographical and/or topological where the ACR procedure applies). The ACR-Detect-Decide list may be referred to as the ACR scenario list as described herein. The selected ACR procedure list may include no ACR procedures, or one or more ACR procedures that the WTRU may support. The detect-decide list may include the requested ACR procedure.

One or more of the following may apply to the ACR selection function performed by an EES. At 7a, based on the reception of the EAS selection response, the EEC may start ACR detection if the provided ACR-Detect-Decide list includes one or more ACR procedures that use (e.g., require) ACR detection at the EEC. The EEC may use the selected ACR scenario list to determine if it should perform ACT detection and/or ACR decision. Otherwise, the EEC may not perform ACR detection. The EEC may store the globally unique identifier associated with its ACR procedure to be used for future ACR management operations, such as an ACR termination request and/or reporting an ACR detection to the ACF. If the EAS selection response includes an ACR validity area, the EEC may verify if the WTRU is in the validity area before starting ACR detection. Otherwise, the EEC may not start ACR detection until the WTRU enters the validity area and may stop ACR detection if the WTRU leaves the validity area. At 7b, after performing ACR selection, the EES may start ACR detection if the provided ACR-Detect-Decide list includes one or more ACR procedure that uses (e.g., requires) ACR detection at the EES. The EES may use the selected ACR scenario list to determine if it should perform ACT detection and/or ACR decision. Otherwise, the EES may not perform ACR detection. The EES may store the globally unique identifier associated with its ACR procedure to be used for future ACR management operations such as an ACR termination request and/or reporting an ACR detection to the ACF. If using an ACR validity area, the EES may verify if the WTRU is in the validity area before starting ACR detection. Otherwise, the EES may not start ACR detection until the WTRU enters the validity area and may stop ACR detection if the WTRU leaves the validity area. At 7c, based on the reception of the ACR selection request and/or notification, the EAS may start ACR detection if the provided ACR-Detect-Decide list includes one or more ACR procedure that uses (e.g., requires) ACR detection at the EAS. The EAS may use the selected ACR scenario list to determine if it should perform ACT detection and/or ACR decision. Otherwise, the EAS may not perform ACR detection. The EAS may store the globally unique identifier associated with its ACR procedure to be used for future ACR management operations such as an ACR termination request and/or reporting an ACR detection to the ACF. If the ACR selection request includes an ACR validity area, the EAS may verify if the WTRU is in the validity area before starting ACR detection. Otherwise, the EAS may not start ACR detection until the WTRU enters the validity area and may stop ACR detection if the WTRU leaves the validity area.

An EEC may perform ASF.

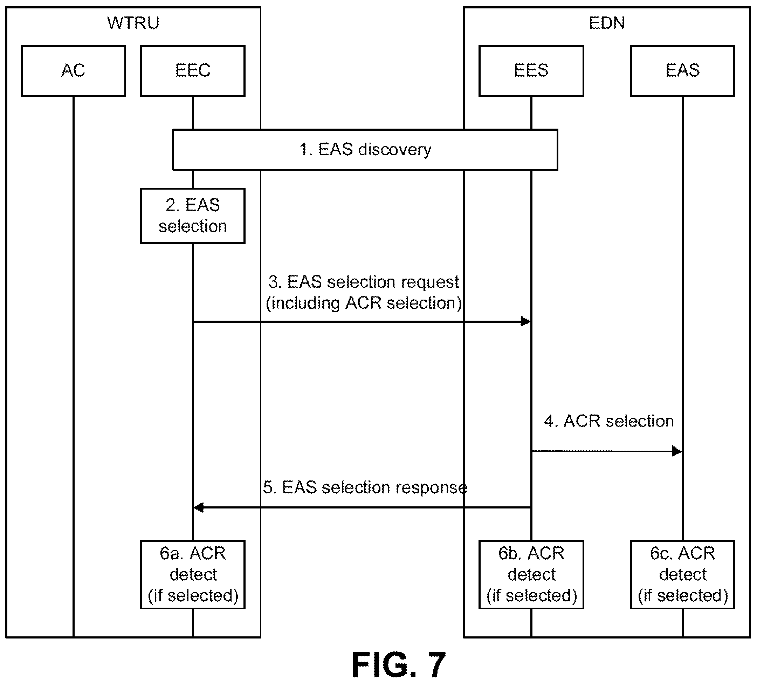

The ACF and ASF may be logical functions that may be part of other logical functions. FIG. 7 shows an example of the ACR selection function, e.g., performed by an EEC.

FIG. 7 shows an example of an ACR selection function performed by an EEC.

One or more of the following may apply to the ACR selection function performed by an EEC. The EEC may be pre-configured to perform ASF. The AC profile may be provisioned in EEC. The AC profile may include AC service continuity support IE with a list of supported and/or preferred ACR scenarios (e.g., the AC profile may specify SCP capabilities for a supported and/or preferred ACR scenario).

One or more of the following may apply to the ACR selection function performed by an EEC. At 1, the EEC may perform the EAS discovery procedure as described herein. The EEC may receive configuration information from the EES (e.g., a first network node), an EAS (e.g., a second network node), and an application client. The EEC may determine the first network node and the second network node using the configuration information, and the second network node may provide a service. The second network node may be registered (e.g., associated) with the first network node.

As a result, the EEC may obtain a list of EAS that meet the EEC criteria specified via the EAS discovery request. The EEC may perform EAS discovery with multiple EES to discover EAS that may be available in different EDNs. At 2, the EEC may select an EAS (e.g., one EAS) from the list of EAS that were discovered. The EEC may select ACR procedures that are compatible with the AC, EEC, EES and/or EAS by using one or more of the following information: the AC service continuity support information element from the AC profile; the EEC service continuity support known at the EEC; the EES service continuity support information element from the EES profile; or the EAS service continuity support information element from the EAS profile. SCP capabilities and/or ACR preference may be considered in ACR selection and included in the service continuity support information. The selection of the ACR procedures (e.g., scenarios) may be performed by the EEC for an application client (AC) and the selected EAS from common supported ACR procedures of the AC, EEC, selected EES, and the selected EAS. An application ACR procedure may be determined for providing continuity for the service based on a capability of the WTRU, an EES (e.g., first network node) capability, and an EAS (e.g., second network node) capability. The ACR procedures may be determined by an ACR-Detect-Decide list. The detect-decide list may include the determined ACR procedure, and the determined ACR procedure may be compatible with the EEC (e.g., the WTRU), an application client (AC) of the WTRU, the first network node, and the second network node. The determined ACR procedure may be determined based on service continuity support information of the AC, the WTRU, the first network node, and the second network node.

The EEC may consider the EES and EAS willingness to participate as ACF included in the EES profile and/or EAS profile. The EEC may consider one or more the following information to select ACR procedures: the current EDN type (e.g., DN or LADN) which may be derived from EES topological and/or geographical service area in the EES profile or the EAS topological and/or geographical service area in the EES profile; the EDN type of the surrounding EDNs which may be derived from the EES topological and/or geographical service area in the EES profile (e.g., surrounding EES may be obtained from the ECS); or the WTRU location (e.g., geographical and/or topological) known at the terminal. After establishing the ACR-Detect-Decide list, the EEC may assign a globally unique identifier to an ACR (e.g., each ACR) present in the list. This identifier may be used for ACR management, for example, when ACR may be re-evaluated, terminated or when an ACR reports detection of the ACF. The EEC may assign an ACR validity area (e.g., geographical and/or topological) to an ACR (e.g., each ACR) present in the list. This identifier may be used for enabling or disabling selected ACR procedures based on the WTRU presence in a defined area.

At 3, the EEC may send an EAS selection request (e.g., an ACR scenario selection announcement) to the EES where the selected EAS is registered. This request may indicate the AC intent. The EAS selection request may inform the EES about the EAS that has been selected by the EEC and may provide the selected ACR scenario list to the EES. The EEC may send the EAS information selection request (also referred herein as a provisioning request) to the EES. The ACR selection request may include an ACR scenario list selected by the EEC, EEC security credentials, selected EASID, selected EAS endpoint, EECID and ACID. The selection request message may request providing information for a second network node, request one or more application context relocation (ACR) procedures, and indicate a second network node identifier, a WTRU identifier, and a security credential. The selection request may include a second network endpoint identifier, and the second network endpoint identifier may identify how a device communicates with the second network.

This request may indicate the AC intent (e.g., the intent to communicate with the EAS (e.g., the second network node)) to use the selected EAS and may include one or more of the following information elements: the selected EAS ID that identifies the EAS that has been selected to be used by the AC; the selected EAS endpoint that identifies how to communicate with the selected EAS (e.g., URI, FQDN, IP address, etc.); the ACR-Detect-Decide list, including the globally unique identifier associated to the selected ACR procedures (e.g., each selected ACR procedure) and including the ACR validity area associated with the selected ACR procedures (e.g., each selected ACR procedure); the selected ACF identity (e.g., FQDN, IP address, etc.); the WTRU identifier that identifies the hosting WTRU (e.g., GPSI or identity token); the EEC identifier that identifies the EEC as there may be multiple EEC collocated on a single WTRU; the EEC service continuity support that identifies ACR procedures supported and/or preferred by the EEC, including SCP capabilities; the EEC service continuity support that identifies ACR procedures supported by the EEC, including SCP capabilities; the Security credentials that resulted from an authorization (e.g., successful authorization) for the edge computing service; or the AC profile information that includes AC service continuity support. The ACR-Detect-Decide list may include zero or more ACR procedures. Capabilities of the first network node may include the service continuity support information of the first network node, and capabilities of the second network node may include the service continuity support information of the second network node. At 4, the EES may send an ACR selection request to the selected EAS. In examples, the EES may (e.g., upon receiving the request from the EEC) send an ACR selection notification to the selected EAS if the subscribe-notify model is used (e.g., if the EAS has subscribed and if the EES allows EEC based ACR scenario selection). The EES may determine, using the identifier for the second network node, that the second network node has subscribed to receive selection notifications. The EES may determine, using the WTRU identifier and the security credential, that the EES is authorized to communicate with the second network node. The EES may send a notification message to the second network node when the WTRU is authorized to communicate with the second network node and the second network node has subscribed to receive selection notifications. The notification message may indicate the requested ACR procedures.

The ACR selection may inform the EAS about a selected ACR scenario list for an AC using the EAS. If an ACR selection occurs, the selection notification may include the selected ACR scenario list, AC ID and WTRU ID. Upon receiving the notification, the EAS may determine if it should perform ACR detection and/or make an ACR decision for an (e.g., particular) AC (ACID, WTRU ID). The EES may send a selection notification to the second network node on a condition that the second network node has subscribed to notifications.

The request and/or notification may include one or more of the following information elements: the ACR-Detect-Decide list, including the globally unique identifier associated with the selected ACR procedures (e.g., each selected ACR procedure) and the ACR validity area associated with the selected ACR procedures (e.g., each selected ACR procedure); the security credentials resulting from an authorization (e.g., successful authorization) for the edge computing service; the AC identifier that identifies the AC; or the WTRU identifier of the hosting WTRU (e.g., GPSI or identity token). At 5, the EES may send the EAS selection response to the EEC. EAS selection response and EAS information provisioning response may be used interchangeably herein. The selection response may include provisioning information for the second network node, and the selection response message may indicate a successful status.

One or more of the following may apply to the ACR selection function performed by an EEC. At 6a, after performing ACR selection, the EEC may start ACR detection if the provided ACR-Detect-Decide list includes one or more ACR procedures that use (e.g., require) ACR detection at the EEC. In examples, the EEC may use the selected ACR scenario list to determine if it should perform ACR detection and/or make an ACR decision. The ACR may be detected on a condition that one of the determined ACR procedures includes an ACR procedure with ACR detection at the WTRU, EES, and/or EAS.

Otherwise, the EEC may not perform ACR detection. The EEC may store the globally unique identifier associated with its ACR procedure to be used for future ACR management operations, such as an ACR termination request and/or reporting an ACR detection to the ACF. If using an ACR validity area, the EEC may verify if the WTRU is in the validity area before starting ACR detection. Otherwise, the EEC may not start ACR detection until the WTRU enters the validity area and may stop ACR detection if the WTRU leaves the validity area. At 6b, based on the reception of the EAS selection request, the EES may start ACR detection if the provided ACR-Detect-Decide list includes one or more ACR procedure that uses (e.g., requires) ACR detection at the EES. Otherwise, the EES may not perform ACR detection. The EES may store the globally unique identifier associated with its ACR procedure to be used for future ACR management operations, such as an ACR termination request and/or reporting an ACR detection to the ACF. If the EAS selection request includes an ACR validity area, the EES may verify if the WTRU is in the validity area before starting ACR detection. Otherwise, the EES may not start ACR detection until the WTRU enters the validity area and may stop ACR detection if the WTRU leaves the validity area. At 6c, based on the reception of the ACR selection request and/or notification, the EAS may start ACR detection if the provided ACR-Detect-Decide list includes one or more ACR procedure that uses (e.g., requires) ACR detection at the EAS. Otherwise, the EAS may not perform ACR detection. The EAS may store the globally unique identifier associated with its ACR procedure to be used for future ACR management operations, such as an ACR termination request and/or reporting an ACR detection to the ACF. If the ACR selection request includes an ACR validity area, the EAS may verify if the WTRU is in the validity area before starting ACR detection. Otherwise, the EAS may not start ACR detection until the WTRU enters the validity area and may stop ACR detection if the WTRU leaves the validity area.

EES performing ACF may be provided.

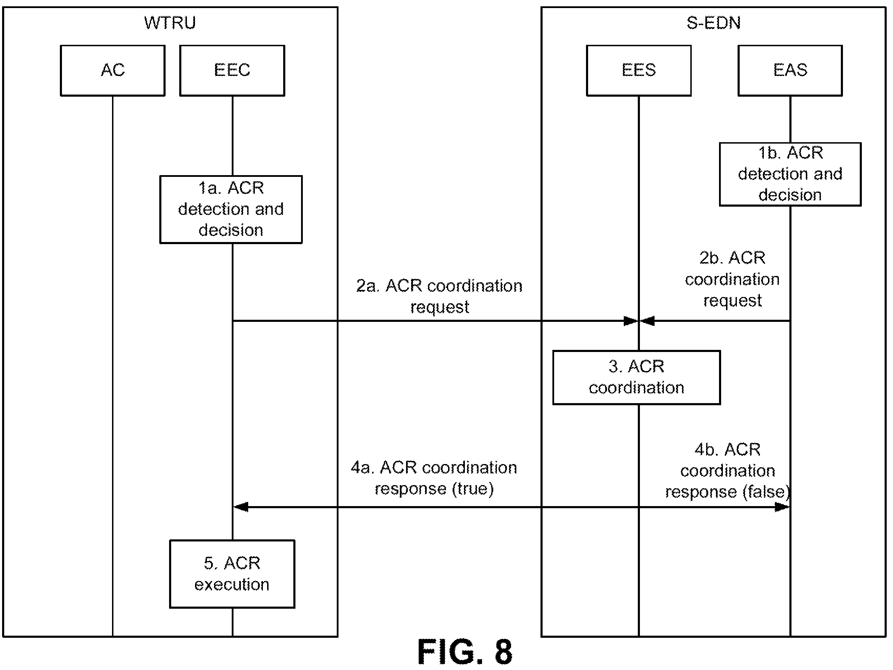

The ACF and ASF may be logical functions that may be part of other logical functions. FIG. 8 shows an example of the ACR Coordination Function, e.g., performed by an EES.

FIG. 8 shows an example of an ACR coordination function performed by an EES.

One or more of the following may apply to the ACR coordination function performed by an EES. The ASF may include two or more ACR procedures in the ACR-Detect-Decide. The ASF may select the EES as the ACF entity.

One or more of the following may apply to the ACR coordination function performed by an EES. At 1a, the ASF may select an ACR procedure that uses (e.g., requires) the EEC to perform ACR detection and decision. ASF may choose the EES as the ACF entity. Based on receiving the ACR selection, the EEC may configure the EES as the ACR coordinator. At 1b, the ASF may select an ACR procedure that uses (e.g., requires) the EAS to perform ACR detection and decision. In examples, ASF may choose the EES as the ACF entity. Based on receiving the ACR selection, the EAS may configure the EES as the ACR coordinator. At 2a, the EEC may decide that the ACR is used (e.g., needed) and may send an ACR coordination request to the EES. This request may include one or more of the following information elements: the requestor identifier that identifies the EEC (e.g., EECID); a unique identifier assigned by the EEC and may identify the ACR coordination request; or the ACR procedure identifier that identifies the ACR procedure that performed detection and decision (e.g., this identifier was provided in the ACR-Detect-Decide list). At 2b, the EAS may decide (e.g., concurrently) that ACR is used (e.g., needed) and may send an ACR coordination request to the EES. This request may include one or more of the following information elements: the requestor identifier that identifies the EAS (e.g., EASID); a unique identifier assigned by the EAS and may identify the ACR coordination request; or the ACR procedure identifier that identifies the ACR procedure that performed detection and decision (e.g., this identifier was provided in the ACR-Detect-Decide list). At 3, based on the reception of the ACR coordination request(s) (e.g., from the second network node), the EES may evaluate which ACR procedure is allowed to execute and may select one (e.g., only one) ACR procedure for execution. The first network node may send, to the second network node, an ACR event notification, and the event notification may indicate that an ACR event has started. The first network node may send the ACR event notification to the second network node based on a determination of a selected ACR procedure from the determined one or more ACR procedures.

The ACR selection algorithm may choose an ACR procedure based on, for example, one or more of the following: the ACR coordination request timestamp; the preferred list of ACR procedures; the source EDN type (e.g., DN or LADN); the target EDN type (e.g., DN or LADN); or the WTRU location. Following the selection of an ACR coordination request, the EES may send an ACR coordination response to parties (e.g., all parties) that sent an ACR coordination request. The response may include the decision to enter the ACR execution phase (e.g., true or false), the ACR globally unique identifier of the ACR entering the execution phase, and/or the ACR coordination request identifier received in the corresponding request. At 4a, based on receiving a coordination response, the EEC may validate that the ACR identifier selected to proceed to the execution phase matches its own ACR identifier, that the decision is positive and/or that the ACR coordination request identifier matched the identifier provided in the request. If the response is positive, the ACR identifier may match the EEC ACR and the ACR coordination request identifier match, and the EEC may proceed to the ACR execution phase. Otherwise, it may not proceed to ACR execution. At 4b, based on receiving a coordination response, the EAS may validate that the ACR identifier selected to proceed to the execution phase matches its own ACR identifier, that the decision is positive and/or that the ACR coordination request identifier matched the identifier provided in the request. If the response is positive, the ACR identifier may match the EEC ACR and the ACR coordination request identifier match, and the EEC may proceed to the ACR execution phase. Otherwise, it may not proceed to ACR execution. In examples, the response may be negative, and the selected ACR identifier may not be the one that the EAS is performing. In such a case, the EAS may not enter the ACR execution phase. At 5, in an example, the response may be positive, and the selected ACR identifier matches the ACR of the EEC, and the ACR coordination identifier received in the response matches the identifier provided in the request. In such a case, the EEC may enter the ACR execution phase per the selected ACR procedure.

EEC performing ACF may be provided.

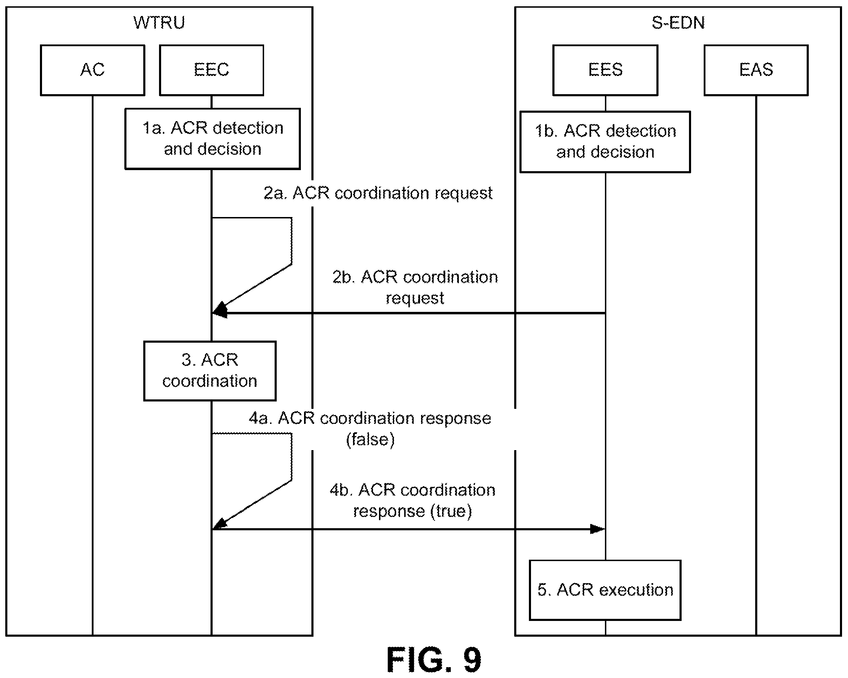

The ACF and ASF may be logical functions that may be part of other logical functions. FIG. 9 shows an example of the ACR coordination function, e.g., performed by an EEC.

FIG. 9 shows an example of an ACR coordination function performed by an EEC.

One or more of the following may apply to the ACR coordination function performed by an EEC. The ASF has included two or more ACR procedures in the ACR-Detect-Decide, or the ASF has selected the EEC as the ACF entity.

One or more of the following may apply to the ACR coordination function performed by an EEC. At 1a, the ASF may select an ACR procedure that uses (e.g., requires) the EEC to perform ACR detection and decision. The ASF may choose the EEC as the ACF. Based on receiving ACR selection information, the EEC may configure the EEC as the ACR coordinator. At 1b, the ASF may select an ACR procedure that uses (e.g., requires) the EES to perform ACR detection and decision. The ASF may choose the EEC as the ACF. Based on receiving ACR selection information, the EES may configure the EEC as the ACR coordinator. At 2a, the EEC may decide that ACR is used (e.g., needed) and may send an ACR coordination request to the EEC. This request may include one or more of the following information elements: the requestor identifier that identifies the EEC (e.g., EECID); a unique identifier assigned by the EEC and may identify the ACR coordination request; or the ACR procedure identifier that identifies the ACR procedure that performed detection and decision (e.g., this identifier was provided in the ACR-Detect-Decide list). In examples, the EEC may communicate the ACR decision internally to the ACF. At 2b, the EES may decide (e.g., concurrently) that ACR is used (e.g., needed) and may send an ACR coordination request to the EEC. This request may include one or more of the following information elements: the requestor identifier that identifies the EES (e.g., EESID); a unique identifier assigned by the EES and may identify the ACR coordination request; or the ACR procedure identifier that identifies the ACR procedure that performed detection and decision (e.g., this identifier was provided in the ACR-Detect-Decide list). At 3, based on the reception of the ACR coordination request(s), the EEC may evaluate which ACR procedure is allowed to execute and may select one (e.g., only one) ACR procedure for execution. The ACR selection algorithm may choose an ACR procedure based on, for example, one or more of the following: the ACR coordination request timestamp; the preferred list of ACR procedures; the source EDN type (e.g., DN or LADN); the target EDN type (e.g., DN or LADN), or the WTRU location. Following the selection of an ACR coordination request, the EEC may send an ACR coordination response to parties (e.g., all parties) that sent an ACR coordination request. The response may include the decision to enter the ACR execution phase (e.g., true or false), the ACR globally unique identifier of the ACR entering the execution phase, and/or the ACR coordination request identifier received in the corresponding request. At 4a, based on receiving a coordination response, the EEC may validate that the ACR identifier selected to proceed to the execution phase matches its own ACR identifier, that the decision is positive, and/or that the ACR coordination request identifier matched the identifier provided in the request. If the response is positive, and the ACR identifier may match the EEC ACR, the ACR coordination may match the requested identifier match, and the EEC may proceed to the ACR execution phase. Otherwise, it may not proceed to ACR execution. In examples, the response may be negative, and the selected ACR identifier may not be the one that the EEC is performing. In such a case, the EEC may not enter the ACR execution phase. At 4b, based on receiving a coordination response, the EES may validate that the ACR identifier selected to proceed to the ACR execution phase matches its own ACR identifier, that the decision is positive and/or that the ACR coordination request identifier matched the identifier provided in the request. If the response is positive, the ACR identifier may match the EES ACR and the ACR coordination request identifier match, and the EES may proceed to the ACR execution phase. Otherwise, it may not proceed to ACR execution. At 5, in examples, the response may be positive, the selected ACR identifier may match the ACR of the EES, and the ACR coordination identifier received in the response matches the identifier provided in the request. In such a case, the EES may enter the ACR execution phase per the selected ACR procedure.

A combined use of ASF and ACF may be provided

The ACF and ASF may be logical functions that may be part of other logical functions.

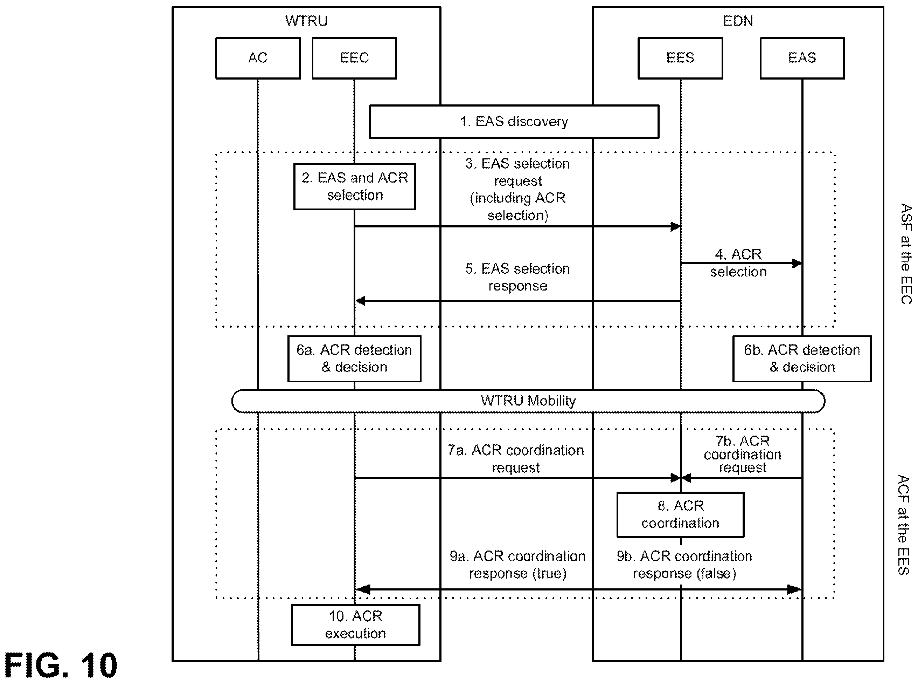

FIG. 10 shows an example of the ACR selection function, e.g., performed by an EEC as described herein used in combination with an ACR coordination function, e.g., performed by an EES as described herein. FIG. 10 shows an example of an ASF and ACF used in combination.

One or more of the following may apply for the ASF and ACF used in combination. At 1, the EEC may perform the EAS discovery procedure. As a result, the EEC may obtain a list of EAS that meet the EEC criteria specified in the EAS discovery request. The EEC may perform EAS discovery with multiple EES to discover EAS that may be available in different EDNs. At 2, the EEC may select an EAS (e.g., one EAS) from the list of EAS that were discovered. The EEC may select ACR procedures following the procedure described herein. At 3, the EEC may send an EAS selection request to the EES where the selected EAS is registered. This request may indicate the AC's intent to use the selected EAS and may include the ACR-Detect-Decide list along with the ACF identity. In example, the EEC may decide to include ACR procedures (e.g., two ACR procedures) in the ACR-Detect-Decide list. The first selected ACR procedure may use (e.g., require) the EEC to perform ACR detection and decision. The second selected ACR procedure may use (e.g., require) the EAS to perform ACR detection and decision. In examples, the EEC may select the EES as the ACR coordination function. At 4, the EES may send an ACR selection request to the selected EAS. The EES may evaluate the provided ACR-Detect-Decide list and may conclude that the ACR procedures included do not use (e.g., require) the EES to perform ACR detection. In such a case, the ACR detection processing may not be started. Since the EES has been chosen to provide ACR coordination, it may initiate the ACR coordination processing if used (e.g., required). At 5, the EES may send the EAS selection response to the EEC. At 6a, for example, after performing the ACR selection, the EEC may identify that one of the ACR procedures included in the ACR-Detect-Decide list uses (e.g., requires) the EEC to perform ACR detection at the EEC and may start the ACR detection and decision processing. At 6b, based on receiving the ACR selection request, the EAS may identify that one of the ACR procedures included in the ACR-Detect-Decide list uses (e.g., requires) the EAS to perform ACR detection at the EAS and may initiate ACR detection and decision processing. As the WTRU moves, the ACR detection at the EEC and EAS may detect WTRU mobility and both the EEC and EAS may decide that an application context relocation is needed. At 7a, the EEC may send an ACR coordination request to the EES that was selected as the ACR coordination function described herein. At 7b, The EAS may send an ACR coordination request to the EES that was selected as the ACR coordination function described herein. At 8, based on the reception of the ACR coordination requests, the EES may decide which ACR procedure may proceed to the execution phase. In examples, the EES may select the EEC to proceed with the ACR procedure execution and may deny the EAS to execute the ACR procedure. At 9A, based on receiving a coordination response, the EEC may validate the ACR identifier, the execution decision, and/or the ACR request identifier. The EEC may proceed to the ACR procedure execution phase based on the ACR coordination request response. At 9b, based on receiving a coordination response, the EAS may validate the ACR identifier, the execution decision, and/or the ACR request identifier. The EAS may not proceed to the ACR procedure execution phase based on the ACR coordination request response. At 10, based on the positive response received, the EEC may start the ACR execution that will transfer the AC context held at the source EAS to a target EAS.

Systems, methods, and instrumentalities are disclosed herein for application context relocation (ACR) selection and/or coordination. A wireless transmit/receive unit (WTRU) may receive configuration information about one or more of a first network node (e.g., an edge enabler server (EES), a second network node (e.g., an edge application server (EAS), and an application client (AC). The WTRU may determine the first network node and the second network node using the configuration information. The second network node may provide a service, and the second network node may be associated with the first network node. The WTRU may determine one or more ACR procedures for providing continuity for the service based on a WTRU capability, a first network node capability, and a second network node capability. The WTRU may send a selection request message to the first network node, and the selection request message may indicate an identifier for the second network node, a WTRU identifier, and the determined one or more ACR procedures. The WTRU may receive a selection response message from the first network node indicating the request processing status.

The first network node may be an edge enabler server (EES), and the second network node may be an edge application server (EAS). The WTRU may determine a list based further on service continuity capability information associated with the WTRU, the first network node, and the second network node. The list may include the determined one or more ACR procedures, and the determined one or more ACR procedures may be compatible with one or more of the WTRU, an application client (AC) of the WTRU, an edge enabler client (EEC) of the WTRU, the first network node, or the second network node.

The WTRU may determine that the determined one or more ACR procedures are determined based on service continuity support information of an application client (AC) associated with the WTRU, the WTRU, the EEC, the first network node, or the second network node. The WTRU may detect an ACR on a condition using the determined one or more ACR procedures.

Systems, methods, and instrumentalities are disclosed herein for ACR selection and/or coordination. A first network node may receive a selection request message from a wireless transmit/receive unit (WTRU), wherein the selection request message indicates one or more application context relocation (ACR) procedures, a second network node identifier, a WTRU identifier, and a security credential. The first network node may determine, using the identifier of the second network node, that the second network node has subscribed to receive selection notifications. The first network node may determine, using the WTRU identifier and the security credential, that the WTRU is authorized to communicate with the second network node. The first network node may send a notification message to the second network node, and the notification message may indicate the requested one or more ACR procedures. The first network node may send a selection response message to the WTRU indicating the request processing status.

The first network node may be an edge enabler server (EES), and the second network node may be an edge application server (EAS). The second network node may be registered with the first network node. The selection request message may include an application client (AC) intent, and the AC intent may be to communicate with the second network.

The first network node may detect an ACR on a condition that at least one of the requested one or more ACR procedures includes an ACR procedure for detecting at the first network node that ACR is needed.

The first network node may detect an ACR on a condition that at least one of the requested one or more ACR procedure includes an ACR procedure for detecting at the second network node that ACR is needed.

Systems, methods, and instrumentalities are disclosed herein for ACR selection and/or coordination. A WTRU may receive configuration information about one or more of a first network node, a second network node, and an application client. The WTRU may determine a first network node and a second network node using the configuration information, and the second network node may be associated with the first network node. The WTRU may send a selection request message to the first network node. The selection request message may indicate a request for an application context relocation (ACR) procedure from the first network node and may indicate service continuity support information associated with the WTRU. The WTRU may receive a selection response message from the first network node, and the selection response message may indicate one or more ACR procedures. The one or more ACR procedures may be supported by the WTRU.

The first network node may be an edge enabler server (EES), and the second network node may be an edge application server (EAS). The selection request may indicate at least one of a security credential, a WTRU identifier, an application client identifier, or an application client profile.

The selection request message further indicates an application client (AC) intent, and the AC intent may be to communicate with the second network. The selection response may include a list, and the list may include the one or more ACR procedures supported by the WTRU.

The WTRU may detect an ACR on a condition that at least one of the one or more ACR procedures received in the selection response includes an ACR procedure for detecting at the WTRU that ACR is needed.

Systems, methods, and instrumentalities are disclosed herein for ACR selection and/or coordination. A first network node may receive a selection request message from a wireless transmit/receive unit (WTRU). The selection request message may request a selection of application context relocation (ACR) procedures and may indicate service continuity capability information associated with the WTRU. The first network node may determine one or more ACR procedures for providing continuity for the service based on the service continuity capability information associated with the WTRU, the first network node, and a second network node. The first network node may determine a detect-decide list based further on the one or more ACR procedures, and the detect-decide list may include the determined one or more ACR procedures. The determined one or more ACR procedures may be compatible with one or more of the WTRU, an application client (AC) of the WTRU, an edge enabler client (EEC) of the WTRU, the first network node, or the second network node. The first network node may send a selection response message to the WTRU, and the selection response message may indicate the determined one or more ACR procedures.

The first network node may be an edge enabler server (EES), and the second network node may be an edge application server (EAS). The first network node may detect an ACR using the one or more ACR procedures. The selection response may include a list, and the list may include the one or more ACR procedures that are supported by the WTRU. The first network node may send a selection notification to the second network node on a condition that the second network node has subscribed to notifications. The service continuity support information may indicate at least a capability of the first network node, a capability of the second network node, and/or a capability of the WTRU.

Systems, methods, and instrumentalities are disclosed herein for ACR selection and/or coordination. A WTRU may detect that an application context relocation (ACR) is needed. The WTRU may, on a condition that the WTRU detects that ACR is needed, send an ACR coordination request to a first network node. The WTRU may receive an ACR coordination request response, and based on the ACR coordination response, the WTRU may determine whether to execute the ACR. The WTRU may, on a condition that the WTRU has not determined that ACR is needed, receive an ACR coordination notification indicating that the WTRU stops ACR detection.

The first network node may be an edge enabler server (EES). The WTRU may send the ACR coordination request to the second network node when it is determined that the WTRU or the second network node has requested an ACR.

Systems, methods, and instrumentalities are disclosed herein for ACR selection and/or coordination. A first network node may detect whether application context relocation (ACR) is needed. The first network node may, on a condition that the first network node detects that ACR is needed, send a first notification to one or more of a wireless transmit receive unit (WTRU) or a second network node. The first network node may, on a condition that the first network node has not detected that ACR is needed, and on a condition that the first network node receives a first ACR coordination request, stop ACR detection. The first network node may send a notification to the WTRU and/or the second network node, and the notification may indicate that ACR detection has stopped. The first network node may send an ACR coordination response to one or more of the WTRU or the second network node indicating that ACR is allowed. The first network node may, on a condition that the first network node receives a second ACR coordination request, indicate to one or more of the WTRU or the second network node that ACR is not allowed.

The first network node may be an edge enabler server (EES), and the second network node may be an edge application server (EAS). The first ACR coordination request may be received from one or more of the WTRU or the second network node.

Systems, methods, and instrumentalities are disclosed herein for application context relocation (ACR) selection and/or coordination. An ACR selection function (ASF) may be used for selecting, communicating, and/or managing ACR procedures for service continuity between an application client on a WTRU (wireless transmit/receive unit) and an edge application server. An entity (e.g., EEC or EES) may act as an ASF. Acting as an ASF may include one or more of the following: selecting ACR procedures that may be used for an AC and EAS pair and producing an ACR-Detect-Decide list (e.g., ACR list, ACR identifiers, and/or ACR validity area); selecting an ACF entity if more than one ACR procedure is selected; communicating and/or sending ASF decisions (e.g., ACR-Detect-Decide list and/or ACF entity identifier) to other entities (e.g., EEC, EES, and/or EAS); or re-evaluating the selected ACR procedures when selection criteria and/or inputs change (e.g., WTRU location, WTRU planned route, WTRU mobility analytics, neighboring EDN ACR capabilities).

ACR Coordination Function (ACF) may be used for gating ACR execution when ACR procedures (e.g., concurrent ACR procedures) are used for service continuity between an application client on a WTRU and an edge application server. An entity (e.g., EEC or EES) may act as an ACF. Acting as an ACR coordination function (ACF) may include one or more of the following: receiving request(s) from entities (e.g., EEC, EES, and/or EAS). The request may indicate that an ACR is used (e.g., required) and may ask for permission to execute an ACR procedure; or sending a response to a requesting entity to indicate if the ACR procedure may be executed.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a wireless transmit/receive unit (WTRU). Configuration information associated with one or more of a first network node, a second network node, and an application client (AC) may be received. The first network node and the second network node may be determined using the configuration information. The second network node may provide a service and may be associated with the first network node. One or more application context relocation (ACR) procedures for providing continuity for the service may be determined. These procedures may be based on a WTRU capability, a first network node capability, and a second network node capability. A selection request message may be sent to the first network node. The selection request message indicates an identifier for the second network node, a WTRU identifier, and the determined one or more ACR procedures. A selection response message may be received from the first network node. The message may indicate a request process status result.

In an example, the first network node may be an edge enabler server (EES). The second network node is an edge application server (EAS).

In an example, a list may be determined based on service continuity capability information associated with the WTRU, the first network node, and the second network node. The may comprise the determined one or more ACR procedures, and these procedures may be compatible with one or more of the WTRU, the AC, an edge enabler client (EEC) of the WTRU, the first network node, or the second network node.

In an example, the determined one or more ACR procedures may be further based on service continuity support information of the AC, the WTRU, the EEC, the first network node, or the second network node.

In an example, an ACR may be detected on a condition using the determined one or more ACR procedures.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a first network node. A selection request message may be received from a WTRU. The selection request message may indicate one or more ACR procedures, a second network node identifier, and a WTRU identifier. It may be determined, using the second network node identifier, that a second network node has subscribed to receive selection notifications. It may be determined, using the WTRU identifier, that the WTRU may be authorized to communicate with the second network node. A notification message may be sent to the second network node, which may indicate the requested one or more ACR procedures. A selection response message may be sent to the WTRU indicating a request processing status result.

In an example, the first network node may be an edge enabler server (EES), and the second network node may be an edge application server (EAS).

In an example, the second network node may be registered with the first network node.

In an example, the selection request message may further include an application client (AC) intent. The AC intent may be to communicate with the second network node.

In an example, an ACR may be detected on a condition that at least one of the requested one or more ACR procedures may comprise an indication that the first network node is to perform ACR detection.

In an example, an ACR may be detected on a condition that at least one of the requested one or more ACR procedures may comprise an indication that the second network node is to perform ACR detection.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a wireless transmit/receive unit (WTRU). Configuration information associated with at least an application client (AC) may be received. A first network node and a second network node may be determined using the configuration information. The second network node may be associated with the first network node. A selection request message may be sent to the first network node. The selection request message may indicate a request for an application context relocation (ACR) procedure from the first network node. The selection request message may indicate service continuity support information associated with the WTRU. A selection response message may be received from the first network node. The selection response message may indicates one or more ACR procedures that may be supported by the WTRU.

In an example, the first network node may be an edge enabler server (EES). The second network node may be an edge application server (EAS).

In an example, the selection request message may indicate at least one of a security credential, a WTRU identifier, an AC identifier, or an AC profile.

In an example, the selection request message may indicate an AC intent. The AC intent may be to communicate with the second network node.

In an example, a selection response message comprising may comprise a list. The list may comprise the one or more ACR procedures that may be supported by the WTRU.

In an example, an ACR may be detected. The ACR detection may occur on a condition that at least one of the one or more ACR procedures received in the selection response message may comprise an ACR procedure for detecting ACR, for example, at the WTRU.

**Systems,** methods, and instrumentalities are disclosed herein for application context relocation (ACR) selection and/or coordination. For example, a method may be provided, which may be performed by a processor (e.g., the processor may be configured to perform the method). And the processor may be associated with a device, such as a first network node. A selection request message may be received from a wireless transmit/receive unit (WTRU). The selection request message may request a selection of application context relocation (ACR) procedures and may indicate service continuity capability information associated with the WTRU. One or more ACR procedures may be selected for providing continuity for a service based on service continuity capability information associated with the WTRU, the first network node, and a second network node. A list may be determined based on the selected one or more ACR procedures. The list may comprise at least the selected one or more ACR procedures. The selected one or more ACR procedures may be compatible with one or more of the WTRU, an application client (AC) of the WTRU, an edge enabler client (EEC) of the WTRU, the first network node, or the second network node. A selection response message may be sent to the WTRU that may indicate the list.

In an example, the first network node may be an edge enabler server (EES), and the second network node may be an edge application server (EAS).

In an example, an ACR may be detected on a condition that the list may comprise an indication that the second network node is to perform ACR detection.

In an example, a selection notification may be sent to the second network node on a condition that the second network node has subscribed to notifications.

In an example, the service continuity capability information may indicate at least a capability of the first network node, a capability of the second network node, or a capability of the WTRU.

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a wireless transmit/receive unit (WTRU). A first application context relocation (ACR) coordination message may be sent to a first network node when an ACR event may be detected. The ACR event may be detected in accordance with an ACR procedure. A second ACR coordination message may be received from the first network node. An ACR execution message may be generated based on the second ACR coordination message. The ACR execution message may be generated in accordance with the ACR procedure. The ACR execution message may be sent to at least one of the first network node or a second network node.

In an example, the first ACR coordination message may be an ACR coordination request. The second ACR coordination message may be an ACR coordination response message.

In an example, the second ACR coordination message may be at least one of an ACR coordination notification message or an ACR coordination response message.

In an example, the second ACR coordination message may indicate that ACR execution is to be performed by the WTRU

In an example, the ACR event may be detected.

In an example, the ACR event may be detected on a condition that the ACR procedure indicates a procedure for detecting ACR at the WTRU.

In an example, a selection response message may be received from the first network node. The selection response message may indicate the ACR procedure.

In an example, the first network node may be a first edge enabler server (EES). The second network node may be a second EES or an edge configuration server (ECS).

Systems, methods, and instrumentalities are disclosed herein for application context relocation (ACR) selection and/or coordination. For example, a method may be provided, which may be performed by a processor (e.g., the processor may be configured to perform the method). And the processor may be associated with a device, such as a first network node. A first application context relocation (ACR) coordination message may be received from at least one of a wireless transmit/receive unit (WTRU) or a second network node. An entity for executing an ACR procedure may be determined. The entity may be one of the first network node, the second network node, or the WTRU. A first coordination decision may be determined based on the determined entity and an identity of the WTRU. A second coordination decision may be determined based on the determined entity and an identity of the second network node. A second ACR coordination message may be sent to the WTRU. The second ACR coordination message may indicate the first coordination decision. A third ACR coordination message may be sent to the second network node. The third ACR coordination message may indicate the second coordination decision.

In an example, the first coordination decision may indicate that the WTRU may be an ACR execution entity. The second coordination decision may indicate that the second network node is to await an ACR execution.

In an example, the first coordination decision may indicate that the WTRU is to await ACR execution. The second coordination decision may indicate that the second network node is an ACR execution entity.

In an example, the first coordination decision may indicate the WTRU is to await ACR execution. The second coordination decision may indicate that the second network node is to await ACR execution.

In an example, an ACR event may be detected.

In an example, the ACR event may be detected on a condition that the ACR procedure may indicate a procedure for detecting ACR at the first network node.

In an example, the first network node may be a first edge enabler server (EES). The second network node may be at least one of a second EES, an edge application server (EAS), or edge configuration server (ECS).

Although features and elements described above are described in particular combinations, each feature or element may be used alone without the other features and elements of the preferred embodiments, or in various combinations with or without other features and elements.

Although the implementations described herein may consider 3GPP specific protocols, it is understood that the implementations described herein are not restricted to this scenario and may be applicable to other wireless systems. For example, although the solutions described herein consider LTE, LTE-A, New Radio (NR) or 5G specific protocols, it is understood that the solutions described herein are not restricted to this scenario and are applicable to other wireless systems as well.

The processes described above may be implemented in a computer program, software, and/or firmware incorporated in a computer-readable medium for execution by a computer and/or processor. Examples of computer-readable media include, but are not limited to, electronic signals (transmitted over wired and/or wireless connections) and/or computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as compact disc (CD)-ROM disks, and/or digital versatile disks (DVDs). A processor in association with software may be used to implement a radio frequency transceiver for use in a WTRU, terminal, base station, RNC, and/or any host computer.

## Claims

1. A wireless transmit/receive unit, WTRU, the WTRU comprising:
a processor configured to:
receive configuration information associated with one or more of a first network node, a second network node, and an application client, AC;
determine the first network node and the second network node using the configuration information, wherein the second network node provides a service, and wherein the second network node is associated with the first network node;
determine one or more application context relocation, ACR, procedures for providing continuity for the service based on a WTRU capability, a first network node capability, and a second network node capability;
send a selection request message to the first network node, wherein the selection request message indicates an identifier for the second network node, an edge enabler client, EEC, identifier associated with the WTRU, and the determined one or more ACR procedures; and
receive a selection response message from the first network node indicating a request process status result.

2. The WTRU of claim 1, wherein the first network node is an edge enabler server, EES, and wherein the second network node is an edge application server, EAS.

3. The WTRU of any one of claims 1 to 2, wherein the processor is further configured to determine a list based on service continuity capability information associated with the WTRU, the first network node, and the second network node, wherein the list comprises the determined one or more ACR procedures, and wherein the determined one or more ACR procedures are compatible with one or more of the WTRU, the AC, an EEC of the WTRU, the first network node, or the second network node.

4. The WTRU of any one of claims 1 to 3, wherein the determined one or more ACR procedures is further based on service continuity support information of the AC, the WTRU, an EEC of the WTRU, the first network node, or the second network node.

5. The WTRU of any one of claims 1 to 4, wherein the processor is further configured to detect an ACR on a condition using the determined one or more ACR procedures.

6. A method performed by a wireless transmit/receive unit, WTRU, the method comprising:
receiving configuration information associated with one or more of a first network node, a second network node, and an application client, AC;
determining the first network node and the second network node using the configuration information, wherein the second network node provides a service, and wherein the second network node is associated with the first network node;
determining one or more application context relocation, ACR, procedures for providing continuity for the service based on a WTRU capability, a first network node capability, and a second network node capability;
sending a selection request message to the first network node, wherein the selection request message indicates an identifier for the second network node, an edge enabler client, EEC, identifier associated with the WTRU, and the determined one or more ACR procedures; and
receiving a selection response message from the first network node indicating a request process status.

7. The method of claim 6, wherein the first network node is an edge enabler server, EES, and wherein the second network node is an edge application server, EAS.

8. The method of any one of claims 6 to 7, wherein the method further comprises determining a list based on service continuity capability information associated with the WTRU, the first network node, and the second network node, wherein the list comprises the determined one or more ACR procedures, and wherein the determined one or more ACR procedures are compatible with one or more of the WTRU, the AC, an EEC of the WTRU, the first network node, or the second network node.

9. The method of any one of claims 6 to 8, wherein the determined one or more ACR procedures is further based on service continuity support information of the AC, the WTRU, an EEC of the WTRU, the first network node, or the second network node.

10. The method of any one of claims 6 to 9, wherein the method further comprises detecting an ACR on a condition using the determined one or more ACR procedures.

## Patentansprüche

1. Drahtlos-Sende- und -Empfangseinheit (Wireless Transmit/Receive Unit, WTRU), wobei die WTRU umfasst:
einen Prozessor, der eingerichtet ist zum:
Empfangen von Konfigurationsinformationen, die mit einem oder mehreren von einem ersten Netzknoten, einem zweiten Netzknoten und einem Anwendungs-Client (AC) verknüpft sind;
Bestimmen des ersten Netzknotens und des zweiten Netzknotens unter Verwendung der Konfigurationsinformationen, wobei der zweite Netzknoten einen Dienst bereitstellt, und wobei der zweite Netzknoten mit dem ersten Netzknoten verknüpft ist;
Bestimmen eines oder mehrerer Application Context Relocation (ACR)-Procederes zum Bereitstellen von Kontinuität für den Dienst auf der Grundlage einer WTRU-Fähigkeit, einer Fähigkeit des ersten Netzknotens und einer Fähigkeit des zweiten Netzknotens;
Senden einer Auswahlanforderungsnachricht an den ersten Netzknoten, wobei die Auswahlanforderungsnachricht eine Kennung für den zweiten Netzknoten, eine mit der WTRU verknüpfte Edge Enabler Client (EEC)-Kennung und das bestimmte eine oder die bestimmten mehreren ACR-Procederes angibt; und
Empfangen einer Auswahlantwortnachricht von dem ersten Netzknoten, die ein Anforderungsprozessstatusergebnis angibt.

2. WTRU nach Anspruch 1, wobei der erste Netzknoten ein Edge Enabler-Server (EES) ist, und wobei der zweite Netzknoten ein Edge Application-Server (EAS) ist.

3. WTRU nach einem der Ansprüche 1 bis 2, wobei der Prozessor des Weiteren dazu eingerichtet ist, eine Liste auf der Grundlage von Dienstkontinuitätsfähigkeitsinformationen, die mit der WTRU, dem ersten Netzknoten und dem zweiten Netzknoten verknüpft sind, zu bestimmen, wobei die Liste das bestimmte eine oder die bestimmten mehreren ACR-Procederes umfasst, und wobei das bestimmte eine oder die bestimmten mehreren ACR-Procederes mit einem oder mehreren von der WTRU, dem AC, einem EEC der WTRU, dem ersten Netzknoten oder dem zweiten Netzknoten kompatibel sind.

4. WTRU nach einem der Ansprüche 1 bis 3, wobei das bestimmte eine oder die bestimmten mehreren ACR-Procederes des Weiteren auf Dienstkontinuitätsunterstützungsinformationen des AC, der WTRU, eines EEC der WTRU, des ersten Netzknotens oder des zweiten Netzknotens basieren.

5. WTRU nach einem der Ansprüche 1 bis 4, wobei der Prozessor des Weiteren dazu eingerichtet ist, eine ACR unter einer Bedingung unter Verwendung des einen oder der mehreren bestimmten ACR-Procederes zu detektieren.

6. Verfahren, das durch eine Drahtlos-Sende- und -Empfangseinheit (Wireless Transmit/Receive Unit, WTRU) durchgeführt wird, wobei das Verfahren umfasst:
Empfangen von Konfigurationsinformationen, die mit einem oder mehreren von einem ersten Netzknoten, einem zweiten Netzknoten und einem Anwendungs-Client (AC) verknüpft sind;
Bestimmen des ersten Netzknotens und des zweiten Netzknotens unter Verwendung der Konfigurationsinformationen, wobei der zweite Netzknoten einen Dienst bereitstellt, und wobei der zweite Netzknoten mit dem ersten Netzknoten verknüpft ist;
Bestimmen eines oder mehrerer Application Context Relocation (ACR)-Procederes zum Bereitstellen von Kontinuität für den Dienst auf der Grundlage einer WTRU-Fähigkeit, einer Fähigkeit des ersten Netzknotens und einer Fähigkeit des zweiten Netzknotens;
Senden einer Auswahlanforderungsnachricht an den ersten Netzknoten, wobei die Auswahlanforderungsnachricht eine Kennung für den zweiten Netzknoten, eine mit der WTRU verknüpfte Edge Enabler Client (EEC)-Kennung und das bestimmte eine oder die bestimmten mehreren ACR-Procederes angibt; und
Empfangen einer Auswahlantwortnachricht von dem ersten Netzknoten, die ein Anforderungsprozessstatusergebnis angibt.

7. Verfahren nach Anspruch 6, wobei der erste Netzknoten ein Edge Enabler-Server (EES) ist, und wobei der zweite Netzknoten ein Edge Application-Server (EAS) ist.

8. Verfahren nach einem der Ansprüche 6 bis 7, wobei das Verfahren des Weiteren umfasst, eine Liste auf der Grundlage von Dienstkontinuitätsfähigkeitsinformationen, die mit der WTRU, dem ersten Netzknoten und dem zweiten Netzknoten verknüpft sind, zu bestimmen, wobei die Liste das bestimmte eine oder die bestimmten mehreren ACR-Procederes umfasst, und wobei das bestimmte eine oder die bestimmten mehreren ACR-Procederes mit einem oder mehreren von der WTRU, dem AC, einem EEC der WTRU, dem ersten Netzknoten oder dem zweiten Netzknoten kompatibel sind.

9. Verfahren nach einem der Ansprüche 6 bis 8, wobei das bestimmte eine oder die bestimmten mehreren ACR-Procederes des Weiteren auf Dienstkontinuitätsunterstützungsinformationen des AC, der WTRU, eines EEC der WTRU, des ersten Netzknotens oder des zweiten Netzknotens basieren.

10. Verfahren nach einem der Ansprüche 6 bis 9, wobei das Verfahren des Weiteren umfasst, eine ACR unter einer Bedingung unter Verwendung des einen oder der mehreren bestimmten ACR-Procederes zu detektieren.

## Revendications

1. Unité émettrice-réceptrice sans fil, WTRU, la WTRU comprenant :
un processeur configuré pour :
recevoir des informations de configuration associées à un ou plusieurs parmi un premier nœud de réseau, un deuxième nœud de réseau et un client d'application, AC ;
déterminer le premier nœud de réseau et le deuxième nœud de réseau à l'aide des informations de configuration, dans laquelle le deuxième nœud de réseau fournit un service, et dans laquelle le deuxième nœud de réseau est associé au premier nœud de réseau ;
déterminer une ou plusieurs procédures de relocalisation de contexte d'application, ACR, pour assurer une continuité du service sur la base d'une capacité de la WTRU, d'une capacité du premier nœud de réseau et d'une capacité du deuxième nœud de réseau ;
envoyer un message de demande de sélection au premier nœud de réseau, dans laquelle le message de demande de sélection indique un identifiant pour le deuxième nœud de réseau, un identifiant de client de programme de développement périphérique, EEC, associé à la WTRU, et les une ou plusieurs procédures ACR déterminées ; et
recevoir un message de réponse de sélection depuis le premier nœud de réseau indiquant un résultat d'état de traitement de demande.

2. WTRU selon la revendication 1, dans laquelle le premier nœud de réseau est un serveur de programme de développement périphérique, EES, et dans laquelle le deuxième nœud de réseau est un serveur d'application périphérique, EAS.

3. WTRU selon l'une quelconque des revendications 1 et 2, dans laquelle le processeur est en outre configuré pour déterminer une liste basée sur des informations de capacité de continuité de service associées à la WTRU, au premier nœud de réseau et au deuxième nœud de réseau, dans laquelle la liste comprend les une ou plusieurs procédures ACR déterminées, et dans laquelle les une ou plusieurs procédures ACR déterminées sont compatibles avec un ou plusieurs parmi la WTRU, l'AC, un EEC de la WTRU, le premier nœud de réseau ou le deuxième nœud de réseau.

4. WTRU selon l'une quelconque des revendications 1 à 3, dans laquelle les une ou plusieurs procédures ACR déterminées sont en outre basées sur des informations de prise en charge de continuité de service de l'AC, de la WTRU, d'un EEC de la WTRU, du premier nœud de réseau ou du deuxième nœud de réseau.

5. WTRU selon l'une quelconque des revendications 1 à 4, dans laquelle le processeur est en outre configuré pour détecter une ACR à condition d'utiliser les une ou plusieurs procédures ACR déterminées.

6. Procédé réalisé par une unité émettrice-réceptrice sans fil, WTRU, le procédé comprenant :
la réception d'informations de configuration associées à un ou plusieurs parmi un premier nœud de réseau, un deuxième nœud de réseau et un client d'application, AC ;
la détermination du premier nœud de réseau et du deuxième nœud de réseau à l'aide des informations de configuration, dans lequel le deuxième nœud de réseau fournit un service, et dans lequel le deuxième nœud de réseau est associé au premier nœud de réseau ;
la détermination d'une ou plusieurs procédures de relocalisation de contexte d'application, ACR, pour assurer une continuité du service sur la base d'une capacité de la WTRU, d'une capacité du premier nœud de réseau et d'une capacité du deuxième nœud de réseau ;
l'envoi d'un message de demande de sélection au premier nœud de réseau, dans lequel le message de demande de sélection indique un identifiant pour le deuxième nœud de réseau, un identifiant de client de programme de développement périphérique, EEC, associé à la WTRU, et les une ou plusieurs procédures ACR déterminées ; et
la réception d'un message de réponse de sélection depuis le premier nœud de réseau indiquant un état de traitement de demande.

7. Procédé selon la revendication 6, dans lequel le premier nœud de réseau est un serveur de programme de développement périphérique, EES, et dans lequel le deuxième nœud de réseau est un serveur d'application périphérique, EAS.

8. Procédé selon l'une quelconque des revendications 6 et 7, dans lequel le procédé comprend en outre la détermination d'une liste basée sur des informations de capacité de continuité de service associées à la WTRU, au premier nœud de réseau et au deuxième nœud de réseau, dans lequel la liste comprend les une ou plusieurs procédures ACR déterminées, et dans lequel les une ou plusieurs procédures ACR déterminées sont compatibles avec un ou plusieurs parmi la WTRU, l'AC, un EEC de la WTRU, le premier nœud de réseau ou le deuxième nœud de réseau.

9. Procédé selon l'une quelconque des revendications 6 à 8, dans lequel les une ou plusieurs procédures ACR déterminées sont en outre basées sur des informations de prise en charge de continuité de service de l'AC, de la WTRU, d'un EEC de la WTRU, du premier nœud de réseau ou du deuxième nœud de réseau.

10. Procédé selon l'une quelconque des revendications 6 à 9, dans lequel le procédé comprend en outre la détection d'une ACR à condition d'utiliser les une ou plusieurs procédures ACR déterminées.
